# DEMANDE DE BREVET EUROPEEN

(11) **EP 3 889 234 A1**
(43) Date de publication de la demande: **06.10.2021**
(21) Numéro de dépôt: 21166234.1
(22) Date de dépôt: 31.03.2021
(51) Int. Cl.: C09J 103/02

(54) **COMPOSITION ADHESIVE COMPRENANT DE LA PULPE DE BETTERAVE**

(30) Priorité: 31.03.2020 FR 2003221
(71) Demandeur: Tereos Starch & Sweeteners Europe, 77230 Moussy-le-Vieux (FR)
(72) Inventeur: DILLY, José, 77230 Moussy-le-Vieux (FR)
(74) Mandataire: Icosa

(57) **Abrégé**

La présente invention concerne une composition adhésive, de préférence pour carton ondulé, comprenant : de la cellulose ; de l'hémicellulose ; de l'amidon ; de l'hydroxyde de sodium ; de l'acide borique ou un de ses dérivés, tels que du borate ou du borax ; et de l'eau.

## Description

### DOMAINE DE L'INVENTION

La présente invention concerne une composition adhésive, plus particulièrement une composition adhésive pour ondulation, plus particulièrement une composition adhésive pour carton ondulé, comprenant de la cellulose et de l'hémicellulose. La présente invention concerne aussi une composition adhésive, plus particulièrement une composition adhésive pour ondulation, plus particulièrement une composition adhésive pour carton ondulé, comprenant de la pulpe de betterave. L'invention concerne également un procédé, de préférence du type Stein-Hall, pour la préparation d'une composition adhésive, ainsi qu'une composition adhésive obtenue par ce procédé. L'invention concerne aussi l'utilisation d'une composition adhésive selon l'invention et/ou obtenue grâce au procédé selon l'invention, dans la fabrication de carton. L'invention concerne encore un carton comprenant une composition adhésive selon l'invention et/ou obtenue grâce au procédé selon l'invention.

### ÉTAT DE LA TECHNIQUE

La pulpe de betterave déshydratée est un des co-produits principaux de l'industrie du sucre de betterave. Elle représente quelques millions de tonnes chaque année en Europe. Elle est habituellement valorisée sous forme de nourriture pour animaux ou de matière première pour la production de gaz vert (biogaz). La présente invention vise à fournir une nouvelle voie de valorisation de la pulpe de betterave.

Par ailleurs, dans le domaine des compositions adhésives, l'amidon est parfois utilisé pour ses propriétés adhésives. Par exemple, l'amidon est présent dans les compositions adhésives produites par le procédé Stein-Hall, ces compositions pouvant être utilisées notamment dans la fabrication de cartons.

En effet, les producteurs de carton ondulé utilisent des colles à base d'amidon afin de coller des feuilles de carton planes et ondulées. Une machine appelée onduleuse dépose la colle sur le sommet des cannelures d'une feuille de carton ondulée ; les vitesses de collage se situent entre 80 et 450 m/min suivant l'onduleuse utilisée et les papiers plus ou moins faciles à coller. Puis, une feuille de carton plane est mise en contact de la feuille de carton ondulée comprenant de la colle, et le tout passe dans un four ; c'est la chaleur dans ce four qui assure la gélatinisation de l'amidon et qui crée un gel et donc un collage entre les feuilles de carton. Si la colle gélifie tardivement dans le four (besoin de trop d'énergie ou de temps), le collage entre les feuilles de carton est trop tardif et ne sera pas assez solide pour résister à la découpe du carton obtenu. Si trop d'eau s'évapore lors du séchage, alors l'humidité dans la cannelure est trop importante et le collage ne tient pas.

Les inventeurs ont découvert de façon surprenante que l'ajout de pulpe de betterave à des compositions adhésives comprenant de l'amidon, de préférence de l'amidon modifié, confère à ces compositions une meilleure adhésivité et une texture améliorée à l'état gélatinisé.

La présente invention propose ainsi d'utiliser de la pulpe de betterave dans des compositions adhésives comprenant de l'amidon, notamment des compositions adhésives pour carton ondulé. L'invention vise ainsi à la fois à fournir une nouvelle voie de valorisation de la pulpe de betterave, et à la fois à permettre d'augmenter l'adhésivité d'une composition adhésive comprenant de l'amidon, tout en assurant une facilité de préparation de ladite composition adhésive et une sûreté du point de vue de la santé du manipulateur de la composition adhésive.

### RÉSUMÉ

La présente invention porte sur une composition adhésive comprenant :
- de la cellulose ;
- de l'hémicellulose ;
- de l'amidon;
- de l'hydroxyde de sodium ;
- de l'acide borique ou un de ses dérivés, tels que du borate ou du borax ; et
- de l'eau,
dans laquelle ladite composition comprend en outre au moins un composé choisi parmi : des pectines, de la lignine, des acides gras et des protéines.

Selon un mode de réalisation, ladite composition comprend:
- de 0,001% à 5%, préférentiellement de 0,01% à 1%, plus préférentiellement de 0,2% à 0,4%, en poids de cellulose ;
- de 0,001% à 5%, préférentiellement de 0,01% à 1%, plus préférentiellement de 0,2% à 0,4%, en poids d'hémicellulose ;
- de 0,001% à 5%, préférentiellement de 0,01% à 1%, plus préférentiellement de 0,15% à 0,35%, en poids de pectines;
- de 0,001% à 5%, préférentiellement de 0,01% à 1%, plus préférentiellement de 0,01% à 0,1%, en poids de lignine;
- de 0,001% à 5%, préférentiellement de 0,01% à 1%, plus préférentiellement de 0,05% à 0,15%, en poids de protéines ;
- de 0,001% à 5%, préférentiellement de 0,001% à 1%, plus préférentiellement de 0,001% à 0,01%, en poids d'acides gras ;
- de 5% à 50%, préférentiellement de 15% à 30%, plus préférentiellement de 20% à 25%, en poids d'amidon ;
- de 0,001% à 5%, préférentiellement de 0,01% à 1%, plus préférentiellement de 0,2% à 0,4%, en poids d'hydroxyde de sodium ;
- de 0,001% à 5%, préférentiellement de 0,01% à 1%, plus préférentiellement de 0,2% à 0,4%, en poids d'acide borique ou un de ses dérivés, tels que du borate ou du borax; et
- de 10% à 94,992%, préférentiellement de 62% à 84,929%, plus préférentiellement de 72,79% à 78,989%, en poids d'eau ;
- les pourcentages en poids étant exprimés par rapport au poids total de la composition.

Selon un mode de réalisation, l'amidon est de l'amidon modifié, de préférence de l'amidon de blé modifié.

La présente invention porte également sur un procédé de préparation d'une composition adhésive, comprenant les étapes suivantes :
a) préparer un premier mélange comprenant de la poudre de pulpe de betterave, de l'amidon, de l'eau et de l'hydroxyde de sodium; puis
b) préparer un second mélange en ajoutant au premier mélange obtenu à l'étape a) : de la poudre de pulpe de betterave, de l'amidon, de l'eau et de l'acide borique ou un de ses dérivés.

Selon un mode de réalisation, le procédé comprend les étapes suivantes :
a) préparer un premier mélange comprenant :
   - de 85 à 95 parts d'eau pour 100 parts du premier mélange,
   - de 6 à 9 parts d'amidon pour 100 parts du premier mélange,
   - de 0,1 à 3 parts de poudre de pulpe de betterave pour 100 parts du premier mélange, et
   - de 0,5 à 5 parts d'hydroxyde de sodium pour 100 parts du premier mélange; puis
b) préparer un second mélange à ajouter au premier mélange obtenu à l'étape a) et comprenant :
   - de 0,5 à 5 parts de poudre de pulpe de betterave pour 100 parts du second mélange,
   - de 25 à 45 parts d'amidon pour 100 parts du second mélange,
   - de 50 à 70 parts d'eau pour 100 parts du second mélange, et
   - de 0,1 à 3 parts d'acide borique ou un de ses dérivés pour 100 parts du second mélange.

De préférence, le second mélange comprend en outre de 0,05 à 2 parts d'hydroxyde de sodium pour 100 parts du second mélange, en particulier une solution aqueuse d'hydroxyde de sodium NaOH à 50%.

Selon un mode de réalisation, l'étape a) est réalisée à une température de 40°C et/ou l'étape b) est réalisée à une température de 20°C.

Selon un mode de réalisation, l'étape a) est réalisée à une température de 35°C et/ou l'étape b) est réalisée à une température de 20°C.

Selon un mode de réalisation, la poudre de betterave utilisée à l'étape a) et/ou à l'étape b) est composée de grains de pulpe de betterave broyée dont le diamètre maximal est de 120 µm.

Selon un mode de réalisation, l'hydroxyde de sodium utilisé à l'étape a) et/ou à l'étape b) est une solution aqueuse d'hydroxyde de sodium NaOH à 33%, de préférence l'hydroxyde de sodium utilisé à l'étape a) dans le premier mélange est une solution aqueuse d'hydroxyde de sodium NaOH à 33%.

Selon un mode de réalisation, l'acide borique ou un de ses dérivés utilisé à l'étape b) dans le second mélange est du borax décahydraté.

Selon un mode de réalisation, l'amidon utilisé à l'étape a) et/ou à l'étape b) est de l'amidon de blé modifié.

La présente invention porte aussi sur un procédé de préparation d'une composition adhésive, en particulier une composition adhésive selon l'invention, comprenant les étapes suivantes :
a) préparer un premier mélange par ajout successif de :
   - de 100 kg à 1000 kg, préférentiellement de 300 kg à 500 kg, plus préférentiellement de 350 kg à 450 kg, encore plus préférentiellement environ 390 kg d'eau, en particulier de l'eau de ville, puis
   - de 10 kg à 50 kg, préférentiellement de 20 kg à 40 kg, plus préférentiellement de 30 kg à 35 kg, encore plus préférentiellement environ 32 kg d'amidon, en particulier de l'amidon de blé modifié, puis
   - de 0,1 kg à 5 kg, préférentiellement de 0,5 kg à 3 kg, plus préférentiellement de 1 kg à 2 kg, encore plus préférentiellement environ 1,6 kg de pulpe de betterave micronisée, en particulier de la pulpe de betterave micronisée dont le diamètre des grains de pulpe de betterave broyée est inférieur à 120 µm, puis
   - de 2 kg à 10 kg, préférentiellement de 4 kg à 8 kg, plus préférentiellement de 6 kg à 7 kg, encore plus préférentiellement environ 6,8 kg d'une solution aqueuse d'hydroxyde de sodium, en particulier une solution aqueuse d'hydroxyde de sodium NaOH à 33%, puis
   - de 10 kg à 100 kg, préférentiellement de 30 kg à 70 kg, plus préférentiellement de 40 kg à 60 kg, encore plus préférentiellement environ 50 kg d'eau, en particulier de l'eau de ville, puis
b) préparer un second mélange par ajout successif de :
   - de 100 kg à 600 kg, préférentiellement de 200 kg à 500 kg, plus préférentiellement de 300 kg à 350 kg, encore plus préférentiellement environ 320 kg d'eau, en particulier de l'eau de ville, puis
   - de 1 kg à 10 kg, préférentiellement de 1 kg à 5 kg, plus préférentiellement de 2 kg à 3 kg, encore plus préférentiellement environ 2,3 kg d'une solution aqueuse d'hydroxyde de sodium, en particulier une solution aqueuse d'hydroxyde de sodium NaOH à 50%, puis
   - de 1 kg à 10 kg, préférentiellement de 2 kg à 5 kg, plus préférentiellement de 3 kg à 4 kg, encore plus préférentiellement environ 3,7 kg de borax, en particulier du borax décahydraté, puis
   - de 50 kg à 500 kg, préférentiellement de 100 kg à 300 kg, plus préférentiellement de 200 kg à 250 kg, encore plus préférentiellement environ 235 kg d'amidon, en particulier de l'amidon de blé modifié, puis
   - de 1 kg à 30 kg, préférentiellement de 5 kg à 20 kg, plus préférentiellement de 10 kg à 14 kg, encore plus préférentiellement environ 11,75 kg de pulpe de betterave micronisée, en particulier de la pulpe de betterave micronisée dont le diamètre des grains de pulpe de betterave broyée est inférieur à 120 µm, puis
   - de 1 kg à 100 kg, préférentiellement de 5 kg à 50 kg, plus préférentiellement de 20 kg à 30 kg, encore plus préférentiellement environ 25 kg d'eau, en particulier de l'eau de ville, puis
c) mélanger le premier mélange avec le second mélange, puis
d) ajouter à la composition obtenue à l'étape c) de 1 kg à 100 kg, préférentiellement de 20 kg à 60 kg, plus préférentiellement de 30 kg à 50 kg, encore plus préférentiellement environ 40 kg d'eau, en particulier de l'eau de ville, puis mélanger.

La présente invention porte aussi sur une composition adhésive obtenue par le procédé selon l'invention.

La présente invention porte également sur l'utilisation d'une composition adhésive selon l'invention ou d'une composition adhésive obtenue par le procédé selon l'invention, dans la fabrication de carton.

La présente invention porte également sur un carton ondulé comprenant au moins une feuille de papier plane et au moins une feuille de papier ondulée collées au niveau des sommets des ondulations de la feuille de papier ondulée avec une composition adhésive selon l'invention ou une composition adhésive obtenue par le procédé selon l'invention.

### DÉFINITIONS

Dans la présente invention, les termes ci-dessous sont définis de la manière suivante :
- **"Acide gras"** concerne un acide carboxylique à chaîne aliphatique carbonée saturée ou insaturée possédant de 4 à 36 atomes de carbone. De préférence, les acides gras de pulpe de betterave comprennent ou consistent en au moins un des acides gras suivants : acide palmitique, acide stéarique, acide oléique, acide linoléique et acide linolénique. Selon un mode de réalisation, **"acides gras de pulpe de betterave"** concerne au moins un acide gras choisi parmi : acide palmitique, acide stéarique, acide oléique, acide linoléique et acide linolénique. Préférentiellement, "acides gras de pulpe de betterave" concerne le mélange constitué des acides gras suivants : acide palmitique, acide stéarique, acide oléique, acide linoléique et acide linolénique. Plus préférentiellement, les acides gras de pulpe de betterave sont constitués de :
   ∘ 15% à 25%, de préférence environ 20,6% en poids d'acide palmitique ;
   ∘ 0,1% à 5%, de préférence environ 1,4% en poids d'acide stéarique ;
   ∘ 5% à 15%, de préférence environ 9,7% en poids d'acide oléique ;
   ∘ 50% à 65%, de préférence environ 57,8% en poids d'acide linoléique ; et
   ∘ 5% à 15%, de préférence environ 10,5% en poids d'acide linolénique ;
      les pourcentages en poids étant exprimés par rapport au poids total des acides gras de pulpe de betterave.
- **"Activité de l'eau"** ou **"AW"** concerne la pression de vapeur d'eau d'un produit humide divisée par la pression de vapeur saturante à la même température. Ce paramètre traduit les interactions de l'eau avec la matrice du produit humide. **"Pression de vapeur saturante"** concerne la pression à laquelle la phase gazeuse d'une substance est en équilibre avec sa phase liquide ou solide à une température donnée dans un système fermé.
- **"Adhésion"** concerne le résultat de l'application d'une composition adhésive sur une première surface et la mise en contact de la zone de la première surface recouverte par la composition adhésive avec une seconde surface, puis l'application d'une combinaison de chaleur, de pression et de temps sur la zone de contact pour fixer la composition adhésive afin d'obtenir la liaison finale entre les première et seconde surfaces. Selon un mode de réalisation, la première surface est cannelée, et la composition adhésive est appliquée sur le sommet des cannelures. Selon un mode de réalisation, la seconde surface est plane. Les surfaces peuvent être par exemple des feuilles de papier, plus particulièrement des feuilles de carton.
- **"Adhérence"** concerne la force nécessaire pour réaliser la séparation de deux matériaux qui sont en contact étroit les empêchant de glisser l'un par rapport à l'autre. Etant donné qu'il s'agit d'une force, l'adhérence est exprimée en l'unité de mesure du Newton (N). Si les deux matériaux sont adhérents l'un à l'autre via un troisième matériau qui est adhésif, par exemple une composition adhésive, la comparaison de l'adhérence entre les deux matériaux en fonction de la nature du 3^{ème} matériau adhésif permet de comparer entre elles les adhésivités de différents troisièmes matériaux adhésifs.
- **"Adhésivité"** concerne l'aptitude d'un matériau à coller, à faire adhérer deux éléments entre eux tels que des surfaces, par exemple des feuilles de papier, en particulier des feuilles de carton. L'évaluation de l'adhésivité est réalisée non pas après la seule mise en contact de deux matériaux, par exemple des surfaces, via la composition adhésive, mais après l'obtention de la liaison finale. Dans le cas d'une composition adhésive à base d'amidon, cette liaison finale correspond à la gélatinisation (aussi appelée gélification) de l'amidon secondaire de la composition adhésive. Cette liaison finale nécessite, après la mise en contact, l'application d'une combinaison de chaleur, de pression et de temps sur la zone de contact (voir la définition du terme "adhésion").
- **"Agent adhésif'** concerne un composé qui augmente l'adhésivité d'une composition.
- **"Amidon"** concerne un polysaccharide composé de chaînes de molécules de D-glucose, les unités de glucose étant liées pour environ 95% par des liaisons alpha-1,4 et pour environ 5% par des liaisons alpha-1,6. Les deux homopolymères constitutifs de l'amidon sont l'amylose (qui résulte de l'enchaînement linéaire d'unités glucose liées par des liaisons alpha-1,4) et l'amylopectine (qui présente une structure ramifiée dans laquelle des fragments linéaires de type amylose sont liés par des liaisons alpha-1,6) ; du fait de la présence de l'amylopectine, l'amidon est partiellement ramifié. **"Amidon modifié"** concerne un amidon qui a été chimiquement ou physiquement modifié, par exemple par hydrolyse, de manière enzymatique ou par ajout d'un agent de réticulation. Selon un mode de réalisation, l'amidon modifié est un amidon de blé auquel il a été ajouté un agent de réticulation. De préférence, l'amidon modifié est le produit MYLBOND® 210 fabriqué par l'entreprise TEREOS®.
- **"Betterave"** ou **"betterave à sucre"** ou **"betterave sucrière"** concerne la plante de nom latin *Beta vulgaris.* Selon un mode de réalisation, le terme "betterave" ou "betterave à sucre" ou "betterave sucrière" concerne la racine de la plante *Beta vulgaris.*
- **"Borate"** concerne une molécule comprenant des atomes de bore et d'oxygène. Le terme "borate" comprend notamment les hydroborates et les formes hydratées des molécules comprenant des atomes de bore et d'oxygène.
- **"Borax"** ou **"borate hydraté de sodium"** concerne une espèce minérale qui est un sel d'acide borique (l'acide borique étant de formule H₃BO₃), à savoir "borax" concerne du tétraborate de sodium. Selon un mode de réalisation, le borax est choisi parmi : du borax anhydre de formule brute Na₂B₄O₇, du borax pentahydraté de formule brute Na₂B₄O₇•5H₂O et du borax décahydraté de formule brute Na₂B₄O₇•10H₂O. De préférence, le borax est du tétraborate de sodium décahydraté, de formule brute Na₂B₄O₇•10H₂O.
- **"Carton"** concerne un matériau composé d'un type de papier, ce type de papier étant caractérisé par une rigidité, une épaisseur et/ou un grammage relativement élevés. Selon un mode de réalisation, une feuille de carton présente un grammage supérieur ou égal à 160 g/m², préférentiellement compris entre 160 g/m² et 600 g/m², plus préférentiellement compris entre 200 g/m² et 600 g/m², encore plus préférentiellement compris entre 200 g/m² et 300 g/m², déterminé selon la norme ISO 536. Selon un mode de réalisation, une feuille de carton présente une épaisseur supérieure ou égale à 175 µm, préférentiellement supérieure ou égale à 300 µm, plus préférentiellement comprise entre 300 µm et 800 µm, déterminée selon la norme ISO 534. Au sens de la présente invention, le terme "carton" concerne l'assemblage d'au moins deux feuilles de carton, de préférence une feuille de carton plane et une feuille de carton ondulée (aussi appelée feuille de carton cannelée). Selon un mode de réalisation, le carton comprend plus de deux feuilles de carton. Selon un mode de réalisation, le carton comprend trois feuilles de carton, par exemple deux feuilles de carton planes de part et d'autre d'une feuille de carton ondulée. Selon un mode de réalisation, le carton comprend quatre feuilles de carton, par exemple une alternance d'une première feuille de carton plane, une première feuille de carton ondulée, une seconde feuille de carton plane et une seconde feuille de carton ondulée. Selon un mode de réalisation, le carton comprend cinq feuilles de carton, par exemple une alternance d'une première feuille de carton plane, une première feuille de carton ondulée, une seconde feuille de carton plane, une seconde feuille de carton ondulée et une troisième feuille de carton plane. Selon un mode de réalisation, le carton comprend sept feuilles de carton, par exemple une alternance d'une première feuille de carton plane, une première feuille de carton ondulée, une seconde feuille de carton plane, une seconde feuille de carton ondulée, une troisième feuille de carton plane, et une troisième feuille de carton ondulée, une quatrième feuille de carton plane. **"Carton ondulé"** concerne l'assemblage d'au moins deux feuilles de carton, au moins une des feuilles de carton étant une feuille de carton ondulée. **"Papier"** concerne un matériau comprenant des fibres de cellulose et se présentant sous forme de feuilles de papier ; le papier est fabriqué par la mise en suspension des fibres de cellulose dans de l'eau, puis par l'égouttage de la suspension obtenue sur une surface plane. Le terme "papier" englobe le terme carton, puisque le carton est un type de papier.
- **"Cellulose"** concerne un glucide constitué d'une chaîne linéaire de D-glucose (entre 15 et 15 000 unités de D-glucose). **"Cellulose microfibrillée"** concerne de la cellulose ayant subi un traitement mécanique résultant en une augmentation de la surface spécifique des fibres de cellulose et en une réduction de leur taille, de préférence à une taille inférieure à 120 µm.
- **"Composition adhésive"** ou **"adhésif'** ou **"colle"** concerne une composition servant à lier des pièces entre elles par contact ; ces pièces peuvent être de même nature ou de nature différente. Selon un mode de réalisation, ces pièces sont des feuilles de papier, en particulier des feuilles de carton.
- **"Compris entre X et Y"** concerne la gamme de valeurs comprises entre X et Y, les bornes X et Y étant incluses dans ladite gamme.
- **"Cossettes"** concerne des morceaux de betterave à sucre obtenus par découpage de betteraves à sucre.
- **"Degré de polymérisation"** concerne le nombre d'unités monomères dans une chaîne macromoléculaire d'un polymère.
- **"Dérivé"** concerne une molécule ayant une relation avec la molécule dont elle dérive, la différence entre le dérivé et la molécule dont il dérive comprenant l'adjonction, la suppression ou la modification de groupes fonctionnels ; par **"groupes fonctionnels",** on entend une structure sub-moléculaire comprenant un assemblage d'atomes conférant une réactivité propre à la molécule qui le contient par exemple un groupe oxy, carbonyle, carboxy, sulfonyle, etc. Généralement, une similarité structurelle existe entre le dérivé et la molécule dont il dérive, qui n'implique pas ni ne signifie une limitation en termes de procédé d'obtention ni d'origine du dérivé.
- **"Environ"** ou **"approximativement",** placé devant un chiffre ou un nombre, signifie plus ou moins 10% de la valeur nominale de ce chiffre ou ce nombre.
- **"Glucide"** concerne un polyalcool comportant une fonction aldéhyde ou cétone.
- **"Glucide complexe"** concerne les glucides ayant un degré de polymérisation supérieur à 2 : oligosaccharides (degré de polymérisation compris entre 3 et 9) et polysaccharides (degré de polymérisation supérieur ou égal à 10).
- **"Glucide simple"** ou **"saccharides"** ou **"sucres",** concerne les monosaccharides (aussi appelés oses) et disaccharides.
- **"Hémicellulose"** concerne un polysaccharide ramifié non amylacé comprenant des unités de glucose et une ou plusieurs unités choisies parmi : xylose, mannose, galactose, rhamnose et arabinose. L'hémicellulose est une fibre insoluble dans l'eau. Selon un mode de réalisation, l'hémicellulose de pulpe de betterave comprend ou consiste en un mélange d'au moins un composé choisi parmi : les xyloglucanes, les arabinanes et les arabinogalactanes de types I et II. "Xyloglucanes" concerne des chaînes macromoléculaires ramifiées dont la chaîne principale est constituée d'unités β-D- glucopyranose liées en β-(1->4), certaines unités glucoses étant substituées par des unités d'α-D-xylopyranose. "Arabinanes" concerne des chaînes macromoléculaires ramifiées dont la chaîne principale est composée d'α-1-5-L-arabinose et la chaîne latérale par des α-1-3-L-arabinose. "Arabinogalactanes" concerne des chaînes macromoléculaires ramifiées dont la chaîne principale est composée d'unités β-D-galactopyranose liées en (1->4) ou (1->3), et dont les ramifications correspondent à des motifs L-arabinofuranose ou D-galactopyranose liés aux C3 ou C6 des unités β-D-galactopyranose, définissant ainsi respectivement les arabinogalactanes de type I ou II.
- **"Humidité relative"** ou **"degré hygrométrique",** couramment notée ϕ, concerne le rapport de la pression partielle de la vapeur d'eau contenue dans l'air sur la pression de vapeur saturante (ou tension de vapeur) à la même température. Elle est donc une mesure du rapport entre le contenu en vapeur d'eau de l'air et sa capacité maximale à en contenir dans ces conditions. Dans le cadre de la présente invention, l'humidité relative est exprimée à des conditions de pression d'environ 10 1325 Pa et aux conditions de température du flux d'air.
- **"Liaison osidique"** ou **"liaison glycosidique",** concerne une liaison covalente issue de la réaction entre le -OH hémiacétalique (porté par le carbone anomérique) d'un ose et une autre molécule (glucidique ou non).
- **"Lignine"** concerne une famille de polymères polyphénoliques composés de monolignols, dont les monomères sont : l'alcool coumarylique, l'alcool coniférylique et l'alcool sinapylique.
- **"Matière sèche"** concerne ce que l'on obtient lorsqu'on soustrait l'eau d'un produit.
- **"Module élastique G' "** ou **"module de stockage"** concerne la capacité d'un matériau viscoélastique à stocker de l'énergie sous conditions de cisaillement.
- **"Module visqueux G" "** ou **"module de perte"** concerne la capacité d'un matériau viscoélastique à dissiper de l'énergie sous conditions de cisaillement.
- **"Pectines"** concerne des polysaccharides comprenant deux types de chaînes macromoléculaires, toutes deux pouvant être ramifiées :
   ∘ une chaîne homogalacturonique constituée de 70 à 100 acides alpha-D-galacturoniques liés en alpha-1->4 et présentant une masse molaire de 12 à 20 kDa ; les acides galacturoniques de cette chaîne peuvent être acétylés et/ou méthylés ; cette chaîne peut être ramifiée, les ramification étant composées essentiellement de beta-D-xylose portés par les acides galacturoniques ; et
   ∘ une chaîne rhamnogalacturonique constituée de la répétition d'un dimère d'acide alpha-D-galacturoniques et d'alpha-L-rhamnose selon la structure (...)α-D-GalA-(1->2)-α-L-Rha-(1->4)-α-D-GalA-(1->2)-α-L-Rha-(1->4) ; cette chaîne peut être ramifiée, les ramification étant composées essentiellement de galactose et d'arabinose portés par des rhamnoses.
- **"Pulpe de betterave"** concerne le résidu d'extraction du sucre de la betterave ; elle comprend ou est constituée de :
   ∘ 21% en poids de pectines ;
   ∘ 28% en poids d'hémicellulose ;
   ∘ 26% en poids de cellulose.
   ∘ 6% en poids de lignine ;
   ∘ 1% en poids d'acides gras ;
   ∘ 8% en poids de protéines ; et
   ∘ 10% en poids de composés C ;
      les pourcentages en poids étant exprimés par rapport au poids de la matière sèche de pulpe de betterave.
   Selon un mode de réalisation, les composés C comprennent ou consistent en un mélange d'au moins un sucre et de composés minéraux. De préférence, l'au moins un sucre est choisi parmi : arabinose, galactose, saccharose, glucose, xylose et mannose. De préférence, les composés minéraux comprennent ou consistent en au moins un composé choisi parmi : calcium, phosphore, magnésium, potassium, sodium, chlore, soufre, manganèse, zinc, cuivre, fer, sélénium, cobalt, molybdène et iode.
   Selon un mode de réalisation, les composés C comprennent en outre au moins un acide phénolique tel que l'acide férulique et l'acide coumarique. Selon un mode de réalisation, les autres composés C comprennent en outre des vitamines telles que de la vitamine A, vitamine D, vitamine E, vitamine B1, vitamine B2, vitamine B5, vitamine B6, vitamine B12, et/ou vitamine PP. Selon un mode de réalisation, les composés C comprennent en outre de la choline.
   Selon un mode de réalisation, les composés C comprennent ou consistent en un mélange d'au moins un sucre, de composés minéraux, de vitamines, d'acides phénoliques et de choline, de préférence tels que définis dans la présente demande.
- **"Procédé Stein-Hall"** concerne un procédé de préparation d'une colle en deux étapes : préparation d'un mélange primaire, puis ajout de composés afin d'obtenir un mélange secondaire. La préparation du mélange primaire comprend l'ajout d'eau dans un récipient, suivi de la dispersion d'amidon qui est ensuite gélatinisé par l'ajout de soude ; il en résulte un gel d'amidon qui servira d'amidon « carrier » ou porteur. La viscosité finale du mélange primaire est ajustée si nécessaire par un (ou plusieurs) rajout d'amidon, ou par un (ou plusieurs) rajout d'eau. La préparation du mélange secondaire comprend le rajout au mélange primaire : d'eau, puis d'amidon, puis de borax, puis de soude. De même que pour le primaire, la viscosité du mélange secondaire, correspondant à la composition adhésive finale, peut être ajustée si nécessaire, par un (ou plusieurs) rajout d'amidon, ou par un (ou plusieurs) rajout d'eau.
   L'amidon du mélange primaire est appelé amidon primaire ou « carrier starch » ; l'amidon du mélange secondaire est appelé amidon secondaire ou amidon ranulaire ou « raw starch ». L'amidon primaire sert de « carrier » en développant une certaine viscosité de la colle ; cette viscosité permet de pouvoir pomper la colle et de la déposer sur le site de collage, par exemple sur le sommet des cannelures d'une feuille de carton ondulée. L'amidon secondaire est gélatinisé par la chaleur dans un four.
- **"Processus d'ondulation"** concerne le processus d'application d'une composition adhésive sur les sommets des cannelures d'une feuille de carton ondulée puis le collage de cette feuille de carton ondulée comprenant de la composition adhésive avec une feuille de carton plane, puis l'éventuelle répétition du processus avec d'autres feuilles de carton permettant de créer le carton ondulé voulu.
- **"Protéines"** concerne une entité fonctionnelle formée d'un ou plusieurs peptides ou polypeptides et éventuellement des co-facteurs non-peptidiques. **"Peptide"** désigne un polymère linéaire de moins de 50 acides aminés dans lequel les acides aminés sont liés ensemble par des liaisons peptidiques. **"Poly-peptide"** désigne un polymère linéaire d'au moins 50 acides aminés dans lequel les acides aminés sont liés ensemble par des liaisons peptidiques.
   Selon un mode de réalisation, les protéines de pulpe de betterave comprennent au moins un acide aminé choisi parmi : lysine, thréonine, méthionine, isoleucine, valine, leucine, phénylalanine, histidine, arginine, cystine, tryptophane, tyrosine, alanine, acide aspartique, glycine, sérine et proline.
- **"Rapport Mw/Mn"** ou **"indice de polymolécularité"** ou **"indice de polydispersité",** concerne le rapport entre la masse molaire moyenne en poids et la masse molaire moyenne en nombre d'un polymère.
- **"Rhéofluidification"** ou **"amincissement au cisaillement"** ou **"désépaississement au cisaillement"** concerne la capacité d'un fluide à avoir une viscosité dynamique qui diminue lorsque le taux de cisaillement augmente.
- **"Stokes"** concerne une unité de mesure de la viscosité cinématique : 1 Stokes (1 St) est égal à 1 cm²/seconde. La **"viscosité cinématique"** est le quotient de la viscosité dynamique par la masse volumique d'un fluide.
- **"Unité"** ou **"monomère"** ou **"motif',** concerne le motif de répétition qui représente l'élément constitutif d'un oligomère ou d'un polymère, tels qu'un saccharide pour un oligosaccharide ou un polysaccharide.
- **"Viscoélastique"** concerne la propriété d'un matériau qui, en conditions de cisaillements, possède à la fois les caractéristiques d'un matériau élastique pur, c'est-à-dire capable de stocker de l'énergie, et à la fois les caractéristiques d'un matériau visqueux pur, c'est-à-dire capable de dissiper de l'énergie.

### DESCRIPTION DÉTAILLÉE

### Composition adhésive

La présente invention porte sur une composition comprenant :
- de l'eau ;
- de l'amidon;
- de l'hydroxyde de sodium ;
- de l'acide borique ou un de ses dérivés, tels que du borate ou du borax ;
- de la cellulose ; et
- de l'hémicellulose.

Cette composition est avantageusement une composition adhésive, par exemple une composition adhésive pour ondulation.

En effet, il apparait que la combinaison spécifique de cellulose et d'hémicellulose dans une composition adhésive à base d'amidon préparée selon un procédé de type Stein-Hall, permet d'augmenter l'adhésivité de cette composition adhésive.

Selon un mode de réalisation, la composition comprend en outre au moins un composé choisi parmi : des pectines, de la lignine, des acides gras et des protéines.

Selon un mode de réalisation, la composition adhésive comprend ou consiste en :
- de l'eau ;
- de l'amidon;
- de l'hydroxyde de sodium ;
- de l'acide borique ou un de ses dérivés, tels que du borate ou du borax ;
- de la cellulose ;
- de l'hémicellulose ;
- des pectines ;
- de la lignine ;
- des acides gras ; et
- des protéines.

Selon un mode de réalisation, la composition adhésive comprend ou consiste en :
- de 0,001% à 5%, préférentiellement de 0,01% à 1%, plus préférentiellement de 0,2% à 0,4%, encore plus préférentiellement environ 0,297% en poids de cellulose ;
- de 0,001% à 5%, préférentiellement de 0,01% à 1%, plus préférentiellement de 0,2% à 0,4%, encore plus préférentiellement environ 0,320% en poids d'hémicellulose ;
- de 0,001% à 5%, préférentiellement de 0,01% à 1%, plus préférentiellement de 0,15% à 0,35%, encore plus préférentiellement environ 0,240% en poids de pectines;
- de 0,001% à 5%, préférentiellement de 0,01% à 1%, plus préférentiellement de 0,01% à 0,1%, encore plus préférentiellement environ 0,069% en poids de lignine;
- de 0,001% à 5%, préférentiellement de 0,01% à 1%, plus préférentiellement de 0,05% à 0,15%, encore plus préférentiellement environ 0,091% en poids de protéines ;
- de 0,001% à 5%, préférentiellement de 0,001% à 1%, plus préférentiellement de 0,001% à 0,01%, encore plus préférentiellement environ 0,011% en poids d'acides gras ;
- de 5% à 50%, préférentiellement de 15% à 30%, plus préférentiellement de 20% à 25%, encore plus préférentiellement environ 22,873% en poids d'amidon ;
- de 0,001% à 5%, préférentiellement de 0,01% à 1%, plus préférentiellement de 0,2% à 0,4%, encore plus préférentiellement environ 0,328% en poids d'hydroxyde de sodium ; et
- de 0,001% à 5%, préférentiellement de 0,01% à 1%, plus préférentiellement de 0,2% à 0,4%, encore plus préférentiellement environ 0,322% en poids d'acide borique ou un de ses dérivés, tels que du borate ou du borax ;
- de 10% à 94,992%, préférentiellement de 62% à 84,929%, plus préférentiellement de 72,79% à 78,989%, encore plus préférentiellement environ 75,334% en poids d'eau ;
   les pourcentages étant exprimés par rapport au poids total de la composition.

Selon un mode de réalisation, la composition adhésive comprend ou consiste en :
- de l'eau ;
- de l'amidon;
- de l'hydroxyde de sodium ;
- de l'acide borique ou un de ses dérivés, tels que du borate ou du borax ;
- de la cellulose ;
- de l'hémicellulose ;
- des pectines ;
- de la lignine ;
- des acides gras ;
- des protéines ; et
- au moins un composé C.

Selon un mode de réalisation, la composition adhésive comprend ou consiste en :
- de 0,001% à 5%, préférentiellement de 0,01% à 1%, plus préférentiellement de 0,2% à 0,4%, encore plus préférentiellement environ 0,297% en poids de cellulose ;
- de 0,001% à 5%, préférentiellement de 0,01% à 1%, plus préférentiellement de 0,2% à 0,4%, encore plus préférentiellement environ 0,320% en poids d'hémicellulose ;
- de 0,001% à 5%, préférentiellement de 0,01% à 1%, plus préférentiellement de 0,15% à 0,35%, encore plus préférentiellement environ 0,240% en poids de pectines;
- de 0,001% à 5%, préférentiellement de 0,01% à 1%, plus préférentiellement de 0,01% à 0,1%, encore plus préférentiellement environ 0,069% en poids de lignine;
- de 0,001% à 5%, préférentiellement de 0,01% à 1%, plus préférentiellement de 0,05% à 0,15%, encore plus préférentiellement environ 0,091% en poids de protéines ;
- de 0,001% à 5%, préférentiellement de 0,001% à 1%, plus préférentiellement de 0,001% à 0,01%, encore plus préférentiellement environ 0,011% en poids d'acides gras ;
- de 0,001% à 5%, préférentiellement de 0,01% à 1%, plus préférentiellement de 0,05% à 0,15%, encore plus préférentiellement environ 0,115% en poids de composés C ;
- de 5% à 50%, préférentiellement de 15% à 30%, plus préférentiellement de 20% à 25%, encore plus préférentiellement environ 22,873% en poids d'amidon ;
- de 0,001% à 5%, préférentiellement de 0,01% à 1%, plus préférentiellement de 0,2% à 0,4%, encore plus préférentiellement environ 0,328% en poids d'hydroxyde de sodium ;
- de 0,001% à 5%, préférentiellement de 0,01% à 1%, plus préférentiellement de 0,2% à 0,4%, encore plus préférentiellement environ 0,322% en poids d'acide borique ou un de ses dérivés, tels que du borate ou du borax ; et
- de 5% à 94,991%, préférentiellement de 61% à 84,919%, plus préférentiellement de 72,64% à 78,939%, encore plus préférentiellement environ 75,334% en poids d'eau ;
   les pourcentages en poids étant exprimés par rapport au poids total de la composition.

Selon un mode de réalisation, la composition adhésive consiste en :
- environ 0,297% en poids de cellulose ;
- environ 0,320% en poids d'hémicellulose ;
- environ 0,240% en poids de pectines;
- environ 0,069% en poids de lignine;
- environ 0,091% en poids de protéines ;
- environ 0,011% en poids d'acides gras ;
- environ 0,115% en poids de composés C ;
- environ 22,873% en poids d'amidon ;
- environ 0,328% en poids d'hydroxyde de sodium ;
- environ 0,322% en poids d'acide borique ou un de ses dérivés, tels que du borate ou du borax ; et
- environ 75,334% en poids d'eau ;
   les pourcentages en poids étant exprimés par rapport au poids total de la composition.

De préférence, au moins un des composés suivants de la composition est issu de pulpe de betterave : la cellulose, l'hémicellulose, les pectines, la lignine, les acides gras, et/ou les protéines.

Selon un mode de réalisation, la composition adhésive comprend en outre des composés C. De préférence, les composés C sont issus de pulpe de betterave.

Selon un mode de réalisation, les composés C comprennent ou consistent en un mélange d'au moins un sucre et de composés minéraux. De préférence, l'au moins un sucre est choisi parmi arabinose, galactose, saccharose, glucose, xylose et mannose. De préférence, les composés minéraux comprennent ou consistent en au moins un composé choisi parmi : calcium, phosphore, magnésium, potassium, sodium, chlore, soufre, manganèse, zinc, cuivre, fer, sélénium, cobalt, molybdène et iode.

Selon un mode de réalisation, les composés C comprennent en outre au moins un acide phénolique tel que l'acide férulique et l'acide coumarique. Selon un mode de réalisation, les composés C comprennent en outre des vitamines telles que de la vitamine A, vitamine D, vitamine E, vitamine B1, vitamine B2, vitamine B5, vitamine B6, vitamine B12, et/ou vitamine PP. Selon un mode de réalisation, les composés C comprennent en outre de la choline.

Selon un mode de réalisation, les composés C comprennent ou consistent en un mélange d'au moins un sucre, de composés minéraux, de vitamines, d'acides phénoliques et de choline, de préférence tels que définis dans la présente demande.

Selon un mode de réalisation, la composition adhésive comprend ou consiste en :
- de l'eau ;
- de l'amidon;
- de l'hydroxyde de sodium ;
- de l'acide borique ou un de ses dérivés, tels que du borate ou du borax ; et
- de la poudre de pulpe de betterave déshydratée.

Selon un mode de réalisation, la composition adhésive comprend ou consiste en :
- de 10% à 94,992%, préférentiellement de 62% à 84,929%, plus préférentiellement de 72,79% à 78,989%, encore plus préférentiellement environ 75,334% en poids d'eau ;
- de 5% à 50%, préférentiellement de 15% à 30%, plus préférentiellement de 20% à 25%, encore plus préférentiellement environ 22,873% en poids d'amidon ;
- de 0,001% à 5%, préférentiellement de 0,01% à 1%, plus préférentiellement de 0,2% à 0,4%, encore plus préférentiellement environ 0,328% en poids d'hydroxyde de sodium ;
- de 0,001% à 5%, préférentiellement de 0,01% à 1%, plus préférentiellement de 0,2% à 0,4%, encore plus préférentiellement environ 0,322% en poids d'acide borique ou un de ses dérivés, tels que du borate ou du borax ; et
- de 0,006% à 30%, préférentiellement de 0,06% à 6%, plus préférentiellement de 0,6% à 1,5%, encore plus préférentiellement environ 1,143% en poids de pulpe de betterave déshydratée ;
   les pourcentages en poids étant exprimés par rapport au poids total de la composition.

Selon un mode de réalisation, la composition adhésive selon l'invention est préparée selon un procédé de type Stein-Hall.

Selon un mode de réalisation, l'amidon est de l'amidon modifié. Il apparait que la combinaison spécifique de la poudre de pulpe de betterave et d'amidon modifié, de préférence le produit MYLBOND® 210, dans une composition adhésive pour carton ondulé, de préférence une composition adhésive préparée selon un procédé de type Stein-Hall, permet d'augmenter l'adhésivité de cette composition adhésive pour carton ondulé.

### Eau

Selon un mode de réalisation, l'eau utilisée dans la composition selon l'invention est de l'eau courante aussi appelée eau du robinet.

Selon un mode de réalisation, l'eau utilisée dans la composition selon l'invention est de l'eau déminéralisée.

Selon un mode de réalisation, l'eau est présente dans la composition adhésive en une teneur comprise de 10% à 94,992%, préférentiellement de 62% à 84,929%, plus préférentiellement de 72,79% à 78,989%, encore plus préférentiellement environ 75,334% en poids par rapport au poids de la composition adhésive.

Selon un mode de réalisation, l'eau est présente dans la composition adhésive en une teneur comprise de 10% à 15%, de 10% à 20%, de 10% à 25%, de 10% à 30%, de 10% à 35%, de 10% à 40%, de 10% à 45%, de 10% à 50%, de 10% à 55%, de 10% à 60%, de 10% à 65%, de 10% à 70%, de 10% à 75%, de 10% à 80%, de 10% à 85%, de 10% à 90%, de 10% à 94,992%, de 15% à 94,992%, de 20% à 94,992%, de 25% à 94,992%, de 30% à 94,992%, de 35% à 94,992%, de 40% à 94,992%, de 45% à 94,992%, de 50% à 94,992%, de 55% à 94,992%, de 60% à 94,992%, de 65% à 94,992%, de 70% à 94,992%, de 75% à 94,992%, de 80% à 94,992%, de 85% à 94,992%, ou de 90% à 94,992%, en poids par rapport au poids de la composition adhésive.

Selon un mode de réalisation, l'eau est présente dans la composition adhésive en une teneur d'environ 10%, 15%, 20%, 25%, 30%, 35%, 40%, 45%, 50%, 55%, 60%, 61%, 62%, 63%, 64%, 65%, 66%, 67%, 68%, 69%, 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, ou 94%, en poids par rapport au poids de la composition adhésive.

### Amidon

Selon un mode de réalisation, l'amidon de la composition adhésive est de l'amidon de blé, de maïs, de pomme de terre, de riz, de manioc et/ou de banane, de préférence de l'amidon de blé.

Selon un mode de réalisation, l'amidon de la composition adhésive est de l'amidon de blé modifié, de l'amidon de maïs modifié, de l'amidon de pomme de terre modifié, de l'amidon de riz modifié, de l'amidon de manioc modifié et/ou de l'amidon de banane modifié. De préférence, l'amidon de la composition adhésive est de l'amidon de blé modifié.

Plus préférentiellement, l'amidon de la composition adhésive est le produit MYLBOND® 210 fabriqué par l'entreprise TEREOS®. MYLBOND® 210 est un amidon ramifié au cours d'un procédé semi-sec utilisant un agent de réticulation. Lorsqu'il est utilisé dans une composition adhésive préparée par un procédé de type Stein-Hall, MYLBOND® 210 permet d'améliorer la stabilité au cisaillement et l'adhésivité de la composition adhésive.

Le fait d'améliorer la stabilité au cisaillement de la composition adhésive, c'est-à-dire la moindre variabilité de la viscosité de cette composition adhésive en fonction du cisaillement, par exemple le cisaillement induit par les pompes à colle et le cisaillement entre les rouleaux de colle à grande vitesse, permet que les rouleaux de colle collectent et transfèrent une quantité constante de colle et donc de réduire la consommation de colle.

De plus, comme MYLBOND® 210 a une structure courte, cet amidon de blé modifié confère aux compositions adhésives le comprenant une viscoélasticité spécifique et un comportement rhéologique distinct. L'addition de pulpe de betterave accentue ce phénomène et réduit le phénomène d'éclaboussure. En conséquence, moins de colle est utilisée lors de l'application de ladite colle, la vitesse d'application de la colle est plus rapide et la qualité du carton ondulé obtenu est améliorée.

Selon un mode de réalisation, l'amidon est présent dans la composition adhésive en une teneur comprise de 5% à 50%, préférentiellement de 15% à 30%, plus préférentiellement de 20% à 25%, encore plus préférentiellement environ 22,873% en poids par rapport au poids de la composition adhésive.

Selon un mode de réalisation, l'amidon est présent dans la composition adhésive en une teneur comprise de 5% à 10%, de 5% à 15%, de 5% à 20%, de 5% à 25%, de 5% à 30%, de 5% à 35%, de 5% à 40%, de 5% à 45%, de 5% à 50%, de 45% à 50%, de 40% à 50%, de 35% à 50%, de 30% à 50%, de 25% à 50%, de 20% à 50%, de 15% à 50%, ou de 10% à 50%, en poids par rapport au poids de la composition adhésive.

Selon un mode de réalisation, l'amidon est présent dans la composition adhésive en une teneur d'environ 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 31%, 32%, 33%, 34%, 35%, 36%, 37%, 38%, 39%, 40%, 41%, 42%, 43%, 44%, 45%, 46%, 47%, 48%, 49%, ou 50%, en poids par rapport au poids de la composition adhésive.

### Hydroxyde de sodium

Selon un mode de réalisation, l'hydroxyde de sodium de la composition adhésive est apporté par de l'hydroxyde de sodium pur aussi appelé soude caustique.

Selon un mode de réalisation, l'hydroxyde de sodium de la composition adhésive est apporté par une solution aqueuse d'hydroxyde de sodium à 10%, 20%, 30%, 40%, 50%, 60%, 70%, 80% ou 90% en poids d'hydroxyde de sodium, de préférence une solution aqueuse d'hydroxyde de sodium à 50% en poids d'hydroxyde de sodium, par rapport au poids de la solution aqueuse d'hydroxyde de sodium.

Selon un mode de réalisation, l'hydroxyde de sodium est présent dans la composition adhésive en une teneur comprise de 0,001% à 5%, préférentiellement de 0,01% à 1%, plus préférentiellement de 0,2% à 0,4%, encore plus préférentiellement environ 0,328% en poids par rapport au poids de la composition adhésive.

Selon un mode de réalisation, l'hydroxyde de sodium est présent dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, l'hydroxyde de sodium est présent dans la composition adhésive en une teneur d'environ 0,001%, 0,005%, 0,01%, 0,05%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Acide borique et ses dérivés

Selon un mode de réalisation, parmi l'acide borique et ses dérivés, c'est le borax qui est utilisé dans la composition adhésive selon l'invention. Selon un mode de réalisation, le borax est sous forme liquide. Selon un mode de réalisation, le borax est le tétraborate de sodium décahydraté de formule brute Na₂B₄O₇•10H₂O. Il est bien connu de l'homme du métier que le borax permet d'améliorer les performances de collage d'une composition adhésive le comprenant ; en son absence, les performances de collage sont réduites, c'est-à-dire que le fabricant de carton est obligé de réduire la vitesse de son onduleuse afin d'avoir des propriétés de collage acceptable.

Selon un mode de réalisation, l'acide borique ou un de ses dérivés est présent dans la composition adhésive en une teneur comprise de 0,001% à 5%, préférentiellement de 0,01% à 1%, plus préférentiellement de 0,2% à 0,4%, encore plus préférentiellement environ 0,322% en poids par rapport au poids de la composition adhésive.

Selon un mode de réalisation, l'acide borique ou un de ses dérivés est présent dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, l'acide borique ou un de ses dérivés est présent dans la composition adhésive en une teneur d'environ 0,001%, 0,005%, 0,01%, 0,05%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Pulpe de betterave

Selon un mode de réalisation, la pulpe de betterave, notamment sous forme de poudre, est utilisée en tant qu'agent adhésif dans la composition adhésive selon l'invention.

Les inventeurs ont découvert de façon surprenante que l'ajout de pulpe de betterave, notamment sous forme de poudre, dans une composition adhésive pour carton ondulé permet d'augmenter la vitesse de l'onduleuse grâce à la meilleure performance de la composition adhésive.

Les inventeurs ont notamment découvert que l'ajout de pulpe de betterave dans une composition adhésive, par exemple une composition adhésive pour carton ondulé, permet d'augmenter l'adhésivité de la composition adhésive. L'exemple 4 illustre ainsi que l'adhésivité d'une composition adhésive selon l'invention, comprenant de la pulpe de betterave, est supérieure à l'adhésivité d'une composition adhésive ne comprenant pas de pulpe de betterave.

Les inventeurs ont également découvert que l'ajout de pulpe de betterave dans une composition adhésive, par exemple une composition adhésive pour carton ondulé, permet d'améliorer la texture de la composition adhésive. L'exemple 5 illustre ainsi qu'une composition adhésive selon l'invention, comprenant de la pulpe de betterave, présente une texture à l'état gélatinisé qui est une texture de gel malléable, tandis qu'une composition adhésive ne comprenant pas de pulpe de betterave présente une texture à l'état gélatinisé qui est celle d'un gel cassant.

Les inventeurs ont aussi découvert que la pulpe de betterave influence l'ancrage mécanique d'une composition adhésive la comprenant et permet une meilleure rétention d'eau, ce qui limite les risques de formation d'ondulation à la surface du papier due à l'imprégnation d'eau du papier, et ce qui permet une meilleure gélatinisation de l'amidon de la composition adhésive (voir l'exemple 8).

De plus, les inventeurs ont découvert que l'ajout de pulpe de betterave dans une composition adhésive, par exemple une composition adhésive pour carton ondulé, permet d'augmenter la force du film de colle tant à l'état gélifié qu'à l'état sec.

De plus, les inventeurs ont découvert que l'ajout de pulpe de betterave dans une composition adhésive, par exemple une composition adhésive pour carton ondulé, permet d'augmenter la viscosité statique Brookfield de cette composition (voir l'exemple 6).

En outre, les inventeurs ont découvert qu'à 30°C, l'élasticité d'une composition adhésive est significativement plus élevée lorsqu'elle comprend de la pulpe de betterave que lorsqu'elle n'en comprend pas (voir l'exemple 9). Cela peut permettre à l'échelle industrielle d'avoir un impact positif sur l'effet d'éclaboussure de la composition : cet effet d'éclaboussure peut être diminué. De plus, le film de colle gélifié et le film de colle séché obtenus à partir d'une composition adhésive comprenant de la pulpe de betterave, sont plus résistants que les films séchés formés par une composition adhésive sans pulpe de betterave (voir l'exemple 9).

Dans un mode de réalisation, la pulpe de betterave déshydratée est sous forme de poudre, de préférence une poudre ayant une granulométrie inférieure à 120 µm. Selon un mode de réalisation, la poudre de pulpe de betterave est obtenue par broyage de cossettes de pulpe de betterave. Selon un autre mode de réalisation, la poudre de pulpe de betterave est obtenue par broyage de granulés de pulpe de betterave, de préférence des granulés d'une longueur d'environ 8 mm. Les inventeurs ont en effet découvert qu'il est plus facile de broyer des granulés que des cossettes de pulpe de betterave, et donc plus facile d'obtenir de la poudre de pulpe de betterave à partir de granulés qu'à partir de cossettes de pulpe de betterave (voir l'exemple 1).

Selon un mode de réalisation, la pulpe de betterave déshydratée est présente dans la composition adhésive en une teneur comprise de 0,006% à 30%, préférentiellement de 0,06% à 6%, plus préférentiellement de 0,6% à 1,5%, encore plus préférentiellement environ 1,143% en poids par rapport au poids de la composition adhésive.

Selon un mode de réalisation, la pulpe de betterave déshydratée est présente dans la composition adhésive en une teneur comprise de 0,006% à 30%, préférentiellement de 0,06% à 6%, plus préférentiellement de 0,6% à 1,5%, encore plus préférentiellement environ 1,143% en poids par rapport au poids de la composition adhésive.

Selon un mode de réalisation, la pulpe de betterave déshydratée est présente dans la composition adhésive en une teneur comprise de 0,006% à 30%, préférentiellement de 0,06% à 6%, plus préférentiellement de 0,6% à 1,5%, encore plus préférentiellement environ 1,143% en poids par rapport au poids de la composition adhésive.

### Cellulose

Selon un mode de réalisation, la cellulose est de la cellulose de pulpe de betterave.

Selon un mode de réalisation, la cellulose est de la cellulose microfibrillée.

Selon un mode de réalisation, la cellulose est présente dans la composition adhésive en une teneur comprise de 0,001% à 5%, préférentiellement de 0,01% à 1%, plus préférentiellement de 0,2% à 0,4%, encore plus préférentiellement environ 0,322% en poids par rapport au poids de la composition adhésive.

Selon un mode de réalisation, la cellulose est présente dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, la cellulose est présente dans la composition adhésive en une teneur d'environ 0,001%, 0,005%, 0,01%, 0,05%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Hémicellulose

Selon un mode de réalisation, l'hémicellulose est de l'hémicellulose de pulpe de betterave.

Selon un mode de réalisation, l'hémicellulose est présente dans la composition adhésive en une teneur comprise de 0,001% à 5%, préférentiellement de 0,01% à 1%, plus préférentiellement de 0,2% à 0,4%, encore plus préférentiellement environ 0,322% en poids par rapport au poids de la composition adhésive.

Selon un mode de réalisation, l'hémicellulose est présente dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, l'hémicellulose est présente dans la composition adhésive en une teneur d'environ 0,001%, 0,005%, 0,01%, 0,05%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Rapport cellulose/hémicellulose

Selon un mode de réalisation, le rapport de la teneur en poids de cellulose dans la composition adhésive sur la teneur en poids d'hémicellulose dans la composition adhésive est compris de 0,5 à 0,999, préférentiellement de 0,8 à 0,999, plus préférentiellement de 0,9 à 0,999, encore plus préférentiellement environ 0,928.

Selon un mode de réalisation, le rapport de la teneur en poids de cellulose dans la composition adhésive sur la teneur en poids d'hémicellulose dans la composition adhésive est d'environ 0,85, 0,86, 0,87, 0,88, 0,89, 0,9, 0,91, 0,92, 0,93, 0,94, 0,95, 0,96, 0,97, 0,98, 0,99.

Les inventeurs ont découvert de façon surprenante qu'une composition adhésive à base d'amidon comprenant de la cellulose et de l'hémicellulose selon un tel rapport de teneurs en poids présente des propriétés améliorées, notamment une meilleure adhésivité, un meilleur ancrage mécanique, une meilleure rétention d'eau et une texture améliorée.

### Pectines

Selon un mode de réalisation, les pectines sont présentes dans la composition adhésive en une teneur comprise de 0,001% à 5%, préférentiellement de 0,01% à 1%, plus préférentiellement de 0,1% à 0,3%, encore plus préférentiellement environ 0,240% en poids par rapport au poids de la composition adhésive.

Selon un mode de réalisation, les pectines sont présentes dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, les pectines sont présentes dans la composition adhésive en une teneur d'environ 0,001%, 0,005%, 0,01%, 0,05%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Lignine

Selon un mode de réalisation, la lignine est présente dans la composition adhésive en une teneur comprise de 0,001% à 5%, préférentiellement de 0,01% à 1%, plus préférentiellement de 0,01% à 0,1%, encore plus préférentiellement environ 0,069% en poids par rapport au poids de la composition adhésive.

Selon un mode de réalisation, la lignine est présente dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, la lignine est présente dans la composition adhésive en une teneur d'environ 0,001%, 0,005%, 0,01%, 0,02%, 0,03%, 0,04%, 0,05%, 0,06%, 0,07%, 0,08%, 0,09%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Protéines

Selon un mode de réalisation, les protéines sont présentes dans la composition adhésive en une teneur comprise de 0,001% à 5%, préférentiellement de 0,01% à 1%, plus préférentiellement de 0,01% à 0,1%, encore plus préférentiellement environ 0,091% en poids par rapport au poids de la composition adhésive.

Selon un mode de réalisation, les protéines sont présentes dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, les protéines sont présentes dans la composition adhésive en une teneur d'environ 0,001%, 0,005%, 0,01%, 0,02%, 0,03%, 0,04%, 0,05%, 0,06%, 0,07%, 0,08%, 0,09%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Acides gras

Selon un mode de réalisation, les acides gras sont présents dans la composition adhésive en une teneur comprise de 0,001% à 5%, préférentiellement de 0,01% à 1%, plus préférentiellement de 0,01% à 0,5%, encore plus préférentiellement environ 0,011% en poids par rapport au poids de la composition adhésive.

Selon un mode de réalisation, les acides gras sont présents dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, les acides gras sont présents dans la composition adhésive en une teneur d'environ 0,001%, 0,005%, 0,01%, 0,02%, 0,03%, 0,04%, 0,05%, 0,06%, 0,07%, 0,08%, 0,09%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Composés C

Selon un mode de réalisation, la composition adhésive selon l'invention comprend au moins un composé C.

Selon un mode de réalisation, l'au moins un composé C est présent dans la composition adhésive en une teneur comprise de 0,001% à 5%, préférentiellement de 0,01% à 1%, plus préférentiellement de 0,1% à 0,3%, encore plus préférentiellement environ 0,115% en poids par rapport au poids de la composition adhésive.

Selon un mode de réalisation, l'au moins un composé C est présent dans la composition adhésive en une teneur comprise de 0,001% à 0,005%, de 0,001% à 0,01%, de 0,001% à 0,05%, de 0,001% à 0,1%, de 0,001% à 0,5%, de 0,001% à 1%, de 0,001% à 2%, de 0,001% à 3%, de 0,001% à 4%, de 0,001% à 5%, de 4% à 5%, de 3% à 5%, de 2% à 5%, de 1% à 5%, de 0,5% à 5%, de 0,1% à 5%, de 0,05% à 5%, de 0,01% à 5%, ou de 0,005% à 5%, en poids par rapport au poids de la composition adhésive.

Selon un mode de réalisation, l'au moins un composé C est présent dans la composition adhésive en une teneur d'environ 0,001%, 0,005%, 0,01%, 0,05%, 0,1%, 0,2%, 0,3%, 0,4%, 0,5%, 0,6%, 0,7%, 0,8%, 0,9%, 1%, 1,5%, 2%, 2,5%, 3%, 3,5%, 4%, 4,5%, ou 5%, en poids par rapport au poids de la composition adhésive.

### Préparation pour composition adhésive

La présente invention porte aussi sur une préparation pour composition adhésive selon l'invention, comprenant ou consistant en :
- de l'amidon;
- de l'hydroxyde de sodium ;
- de l'acide borique ou un de ses dérivés, tels que du borate ou du borax ;
- de la cellulose ; et
- de l'hémicellulose.

Selon un mode de réalisation, la préparation pour composition adhésive selon l'invention comprend ou consiste en :
- de l'amidon, préférentiellement en une teneur de 85% à 98,8% en poids, plus préférentiellement environ 92,73% en poids, par rapport au poids de la préparation ;
- de l'hydroxyde de sodium, préférentiellement en une teneur de 0,1% à 5% en poids, plus préférentiellement environ 1,33% en poids, par rapport au poids de la préparation ;
- de l'acide borique ou un de ses dérivés, tels que du borate ou du borax, préférentiellement en une teneur de 0,1% à 5% en poids, plus préférentiellement environ 1,30% en poids, par rapport au poids de la préparation ; et
- de la poudre de pulpe de betterave déshydratée, préférentiellement en une teneur de 1% à 10% en poids, plus préférentiellement environ 4,64% en poids, par rapport au poids de la préparation.

Selon un mode de réalisation, la préparation est anhydre.

Selon un mode de réalisation, les pourcentages en poids exprimés par rapport au poids de la préparation sont exprimés par rapport au poids de la matière sèche de la préparation.

Selon un mode de réalisation, la préparation pour composition adhésive selon l'invention comprend ou consiste en :
- de l'amidon, préférentiellement en une teneur de 55% à 99,19% en poids, plus préférentiellement de 85% à 98%, encore plus préférentiellement environ 92,73% en poids, par rapport au poids de la préparation ;
- de l'hydroxyde de sodium, préférentiellement en une teneur de 0,1% à 5% en poids, plus préférentiellement environ 1,33% en poids, par rapport au poids de la préparation ;
- de l'acide borique ou un de ses dérivés, tels que du borate ou du borax, préférentiellement en une teneur de 0,1% à 5% en poids, plus préférentiellement environ 1,30% en poids, par rapport au poids de la préparation ;
- de la cellulose, préférentiellement en une teneur de 0,1% à 5% en poids, plus préférentiellement environ 1,20% en poids, par rapport au poids de la préparation ;
- de l'hémicellulose, préférentiellement en une teneur de 0,1% à 5% en poids, plus préférentiellement environ 1,30% en poids, par rapport au poids de la préparation ;
- des pectines, préférentiellement en une teneur de 0,1% à 5% en poids, plus préférentiellement environ 0,97% en poids, par rapport au poids de la préparation ;
- de la lignine, préférentiellement en une teneur de 0,1% à 5% en poids, plus préférentiellement environ 0,28% en poids, par rapport au poids de la préparation ;
- des acides gras, préférentiellement en une teneur de 0,01% à 5% en poids, plus préférentiellement environ 0,05% en poids, par rapport au poids de la préparation ;
- des protéines, préférentiellement en une teneur de 0,1% à 5% en poids, plus préférentiellement environ 0,37% en poids, par rapport au poids de la préparation ; et
- des composés C, préférentiellement en une teneur de 0,1% à 5% en poids, plus préférentiellement environ 0,47% en poids, par rapport au poids de la préparation .

Selon un mode de réalisation, la préparation est anhydre.

Selon un mode de réalisation, les pourcentages en poids exprimés par rapport au poids de la préparation sont exprimés par rapport au poids de la matière sèche de la préparation.

La préparation pour composition adhésive selon l'invention peut avantageusement être mélangée avec de l'eau.

Selon un mode de réalisation, les composés C comprennent ou consistent en un mélange d'au moins un sucre et de composés minéraux. De préférence, l'au moins un sucre est choisi parmi arabinose, galactose, saccharose, glucose, xylose et mannose. De préférence, les composés minéraux comprennent ou consistent en au moins un composé choisi parmi : calcium, phosphore, magnésium, potassium, sodium, chlore, soufre, manganèse, zinc, cuivre, fer, sélénium, cobalt, molybdène et iode.

Selon un mode de réalisation, les composés C comprennent en outre au moins un acide phénolique tel que l'acide férulique et l'acide coumarique. Selon un mode de réalisation, les composés C comprennent en outre des vitamines telles que de la vitamine A, vitamine D, vitamine E, vitamine B1, vitamine B2, vitamine B5, vitamine B6, vitamine B12, et/ou vitamine PP. Selon un mode de réalisation, les composés C comprennent en outre de la choline.

Selon un mode de réalisation, les composés C comprennent ou consistent en un mélange d'au moins un sucre, de composés minéraux, de vitamines, d'acides phénoliques et de choline, de préférence tels que définis dans la présente demande.

### Procédé de préparation de la composition adhésive

L'invention concerne également un procédé de préparation d'une composition adhésive selon l'invention. Avantageusement, ce procédé est un procédé de type Stein-Hall.

Selon un mode de réalisation, le procédé de préparation d'une composition adhésive selon l'invention comprend ou consiste en les étapes suivantes :
a) préparer un premier mélange comprenant de la poudre de pulpe de betterave, de l'amidon, de l'eau et de l'hydroxyde de sodium; puis
b) préparer un second mélange en ajoutant au premier mélange obtenu à l'étape a) : de la poudre de pulpe de betterave, de l'amidon, de l'eau et de l'acide borique ou un de ses dérivés.

Selon un mode de réalisation, l'étape b) comprend la préparation d'un second mélange (comprenant de la poudre de pulpe de betterave, de l'amidon, de l'eau et de l'acide borique ou un de ses dérivés) puis l'ajout de ce second mélange au premier mélange obtenu à l'étape a). Selon un autre mode de réalisation, l'étape b) comprend la préparation d'un second mélange (comprenant de la poudre de pulpe de betterave, de l'amidon, de l'eau et de l'acide borique ou un de ses dérivés) puis l'ajout du premier mélange obtenu à l'étape a) à ce second mélange obtenu.

Selon un mode de réalisation, l'ajout de certains composés de l'étape a), notamment l'eau, peut être réalisé en plusieurs fois au cours de l'étape a).

Selon un mode de réalisation, l'ajout de certains composés de l'étape b), notamment l'eau, peut être réalisé en plusieurs fois au cours de l'étape b).

De préférence, l'eau est de l'eau de ville.

Selon un mode de réalisation, le procédé de préparation d'une composition adhésive selon l'invention comprend ou consiste en les étapes suivantes :
a) préparer un premier mélange comprenant :
   - de 1g à 10g, préférentiellement de 3g à 7g, plus préférentiellement de 4g à 6g, encore plus préférentiellement environ 5g de poudre de pulpe de betterave déshydratée,
   - de 50g à 150g, préférentiellement de 75g à 125g, plus préférentiellement de 90g à 110g, encore plus préférentiellement environ 100,01g d'amidon,
   - de 1000g à 1300g, préférentiellement de 1050g à 1200g, plus préférentiellement de 1100g à 1150g, encore plus préférentiellement environ 1127,86 g d'eau, et
   - de 5g à 50g, préférentiellement de 10g à 30g, plus préférentiellement de 20g à 25g, encore plus préférentiellement environ 22g d'une solution aqueuse d'hydroxyde de sodium à 50%; puis
b) préparer un second mélange en ajoutant au premier mélange obtenu à l'étape a) :
   - de 10g à 50g, préférentiellement de 20g à 40g, plus préférentiellement de 30g à 35g, encore plus préférentiellement environ 33,4g de poudre de pulpe de betterave déshydratée,
   - de 500g à 1000g, préférentiellement de 600g à 700g, plus préférentiellement de 650g à 680g, encore plus préférentiellement environ 668,08g d'amidon,
   - de 1000g à 1500g, préférentiellement de 1300g à 1500g, plus préférentiellement de 1390g à 1410g, encore plus préférentiellement environ 1401,86g d'eau, et
   - de 1g à 20g, préférentiellement de 5g à 15g, plus préférentiellement de 10g à 12g, encore plus préférentiellement environ 10,8g de borax.

Selon un mode de réalisation, le procédé de préparation d'une composition adhésive selon l'invention comprend ou consiste en les étapes suivantes :
a) préparer un premier mélange comprenant :
   - de 0,1 kg à 5 kg, préférentiellement de 0,5 kg à 3 kg, plus préférentiellement de 1 kg à 2 kg, encore plus préférentiellement environ 1,6 kg de pulpe de betterave micronisée,
   - de 10 kg à 50 kg, préférentiellement de 20 kg à 40 kg, plus préférentiellement de 30 kg à 35 kg, encore plus préférentiellement environ 32 kg d'amidon,
   - de 100 kg à 1000 kg, préférentiellement de 300 kg à 500 kg, plus préférentiellement de 400 kg à 500 kg, encore plus préférentiellement environ 440 kg d'eau, et
   - de 2 kg à 10 kg, préférentiellement de 4 kg à 8 kg, plus préférentiellement de 6 kg à 7 kg, encore plus préférentiellement environ 6,8 kg d'une solution aqueuse d'hydroxyde de sodium à 33% ; puis
b) préparer un second mélange en ajoutant au premier mélange obtenu à l'étape a) :
   - de 1 kg à 30 kg, préférentiellement de 5 kg à 20 kg, plus préférentiellement de 10 kg à 14 kg, encore plus préférentiellement environ 11,75 kg de pulpe de betterave micronisée,
   - de 50 kg à 500 kg, préférentiellement de 100 kg à 300 kg, plus préférentiellement de 200 kg à 250 kg, encore plus préférentiellement environ 235 kg d'amidon,
   - de 1 kg à 10 kg, préférentiellement de 1 kg à 5 kg, plus préférentiellement de 2 kg à 3 kg, encore plus préférentiellement environ 2,3 kg d'une solution aqueuse d'hydroxyde de sodium à 50%,
   - de 100 kg à 600 kg, préférentiellement de 200 kg à 500 kg, plus préférentiellement de 300 kg à 400 kg, encore plus préférentiellement environ 345 kg d'eau, et
   - de 1 kg à 10 kg, préférentiellement de 2 kg à 5 kg, plus préférentiellement de 3 kg à 4 kg, encore plus préférentiellement environ 3,7 kg de borax.

Selon un mode de réalisation, le procédé de préparation d'une composition adhésive selon l'invention comprend ou consiste en les étapes suivantes :
a) préparer un premier mélange comprenant :
   - de 85 à 95 parts, préférentiellement de 89 à 92 parts, plus préférentiellement environ 91,5 parts d'eau pour 100 parts du premier mélange,
   - de 6 à 9 parts, préférentiellement de 6,5 à 8 parts, plus préférentiellement environ 6,6 parts d'amidon pour 100 parts du premier mélange,
   - de 0,05 à 3 parts, préférentiellement de 0,1 à 1 parts, plus préférentiellement environ 0,3 parts de poudre de pulpe de betterave pour 100 parts du premier mélange, et
   - de 0,5 à 5 parts, préférentiellement de 1 à 2 parts, plus préférentiellement environ 1,4 parts d'hydroxyde de sodium pour 100 parts du premier mélange, en particulier une solution d'hydroxyde de sodium à 33%, puis
b) préparer un second mélange comprenant :
   - de 0,5 à 5 parts, préférentiellement de 1,5 à 2,5 parts, plus préférentiellement environ 2 parts de poudre de pulpe de betterave pour 100 parts du second mélange,
   - optionnellement de 0,05 à 2 parts, préférentiellement de 0,1 à 0,5 parts, plus préférentiellement environ 0,4 parts d'hydroxyde de sodium pour 100 parts du second mélange, en particulier une solution aqueuse d'hydroxyde de sodium NaOH à 50%,
   - de 25 à 45 parts, préférentiellement de 30 à 40 parts, plus préférentiellement environ 39,3 parts d'amidon pour 100 parts du second mélange,
   - de 50 à 70 parts, préférentiellement de 55 à 68 parts, plus préférentiellement environ 57,7 parts d'eau pour 100 parts du second mélange, et
   - de 0,1 à 3 parts, préférentiellement de 0,4 à 0,8 parts, plus préférentiellement environ 0,6 parts d'acide borique ou un de ses dérivés pour 100 parts du second mélange, puis
c) mélanger le premier obtenu à l'étape a) et le second mélange obtenu à l'étape b), puis
d) optionnellement, ajouter de l'eau au mélange obtenu à l'étape c).

Avantageusement, l'étape a) des procédés de préparation d'une composition adhésive selon l'invention est réalisée à une température de 35°C à 40°C.

Avantageusement, l'étape b) est réalisée à une température de 20°C.

Plus avantageusement, le mélange de l'étape a) est réalisé à une température de 40°C et le mélange de l'étape b) est réalisé à une température de 20°C. Alternativement, le mélange de l'étape a) est réalisé à une température de 35°C et le mélange de l'étape b) est réalisé à une température de 20°C.

Selon un mode de réalisation, la poudre de betterave utilisée à l'étape a) et/ou à l'étape b) présente une granulométrie inférieure à 120 µm.

Selon un mode de réalisation, l'amidon utilisé à l'étape a) et/ou à l'étape b) est un amidon de blé, de préférence un amidon de blé modifié. Plus préférentiellement, l'amidon utilisé à l'étape a) et/ou à l'étape b) est le produit MYLBOND® 210 fabriqué par l'entreprise TEREOS®. Lorsqu'il est utilisé dans une composition adhésive préparée par un procédé de type Stein-Hall, MYLBOND® 210 permet d'améliorer la stabilité au cisaillement, et l'adhésivité de la composition adhésive.

Les inventeurs ont en effet découvert de façon surprenante que l'utilisation de la combinaison spécifique de la pulpe de betterave et d'amidon modifié, de préférence le produit MYLBOND® 210, dans le cadre d'un procédé de type Stein-Hall de préparation d'une composition adhésive pour carton ondulé, permet d'augmenter l'adhésivité de cette composition adhésive.

Selon un mode de réalisation, l'hydroxyde de sodium utilisé à l'étape a) est une solution d'hydroxyde de sodium à 50%. Selon un mode de réalisation, l'hydroxyde de sodium utilisé à l'étape a) est de l'hydroxyde de sodium pur. Selon un mode de réalisation, l'hydroxyde de sodium utilisé à l'étape a) est une solution d'hydroxyde de sodium à 33%.

Selon un mode de réalisation, l'acide borique ou un de ses dérivés utilisé à l'étape b) est choisi parmi : du borax anhydre de formule brute Na₂B₄O₇, du borax pentahydraté de formule brute Na₂B₄O₇•5H₂O et du borax décahydraté de formule brute Na₂B₄O₇•10H₂O. De préférence, l'acide borique ou un de ses dérivés utilisé à l'étape b) est du tétraborate de sodium décahydraté, de formule brute Na₂B₄O₇•10H₂O, ou borax décahydraté.

Selon un mode de réalisation, l'eau utilisée à l'étape a) et/ou à l'étape b) est de l'eau du robinet (aussi appelée eau de ville). Selon un autre mode de réalisation, l'eau utilisée à l'étape a) et/ou à l'étape b) est de l'eau déminéralisée.

Selon un mode de réalisation, les mélanges réalisés à l'étape a) et/ou à l'étape b) sont réalisés de façon à avoir un taux de cisaillement minimum de 300 par seconde.

Selon un mode de réalisation, le procédé de préparation d'une composition adhésive selon l'invention comprend ou consiste en les étapes suivantes :
a) préparer une première partie selon les étapes suivantes :
   - apport d'eau de ville : 390 kg ; puis
   - chauffage de l'eau de ville jusqu'à obtenir une température de 35°C ; puis
   - ajout d'amidon modifié Mylbond® 210 : 32 kg ; puis
   - maintien du mélange à une température de 35°C ; puis
   - ajout de pulpe de betterave micronisée (diamètre < 120 µm) : 1,6 kg ; puis
   - mélange durant 20 secondes ; puis
   - ajout d'une solution aqueuse d'hydroxyde de sodium NaOH à 33% : 6,8 kg ; puis
   - ajout d'eau de ville : 50 kg ; puis
   - mélange durant 500 secondes ; puis
b) préparer une deuxième partie selon les étapes suivantes :
   - apport d'eau de ville à une température de 20°C : 320 kg ; puis
   - ajout d'une solution aqueuse d'hydroxyde de sodium NaOH à 50% : 2,3 kg ; puis
   - mélange durant 20 secondes ; puis
   - ajout de borax décahydraté : 3,7 kg ; puis
   - mélange durant 20 secondes ; puis
   - ajout d'amidon modifié Mylbond® 210 : 235 kg ; puis
   - ajout de pulpe de betterave micronisée (diamètre < 120 µm) : 11,75 kg ; puis
   - mélange durant 40 secondes ; puis
   - ajout d'eau de rinçage : 25 kg ; puis
   - mélange durant 10 secondes ; puis
c) mélange des première et deuxième parties :
   - ajout de la première partie dans la deuxième partie ; puis
   - mélange durant 300 secondes ; puis
d) ajout de 40 kg d'eau de ville au mélange obtenu à l'étape c) ; puis
e) agitation durant 400 secondes.

### Composition adhésive obtenue par le procédé

La présente invention porte également sur une composition adhésive obtenue par le procédé selon l'invention.

Selon un mode de réalisation, la composition adhésive obtenue par le procédé selon l'invention est adaptée à l'utilisation dans un processus ondulation.

### Utilisation d'une composition adhésive selon l'invention

La présente invention porte aussi sur l'utilisation de la composition adhésive selon l'invention telle que décrite dans la présente demande.

Selon un mode de réalisation, la composition adhésive selon l'invention est utilisée dans le cadre d'un processus d'ondulation. Selon un mode de réalisation, la composition adhésive selon l'invention est utilisée pour coller des matériaux comprenant des fibres de cellulose tels que du papier ou du carton. Selon un mode de réalisation, la composition adhésive selon l'invention est utilisée dans la fabrication de carton.

La présente invention porte aussi sur l'utilisation d'une composition adhésive obtenue par le procédé selon l'invention tel que décrit dans la présente demande.

Selon un mode de réalisation, la composition adhésive obtenue par le procédé selon l'invention est utilisée dans le cadre d'un processus d'ondulation. Selon un mode de réalisation, la composition adhésive obtenue par le procédé selon l'invention est utilisée pour coller des matériaux comprenant des fibres de cellulose tels que du papier ou du carton. Selon un mode de réalisation, la composition adhésive obtenue par le procédé selon l'invention est utilisée dans la fabrication de carton.

### Carton

La présente invention porte également sur un carton comprenant une composition adhésive selon l'invention telle que décrite dans la présente demande ou une composition adhésive obtenue par le procédé selon l'invention.

Selon un mode de réalisation, le carton comprend une composition adhésive selon l'invention telle que décrite dans la présente demande ou une composition adhésive obtenue par le procédé selon l'invention, à l'état sec et gélatinisé.

### BRÈVE DESCRIPTION DES FIGURES

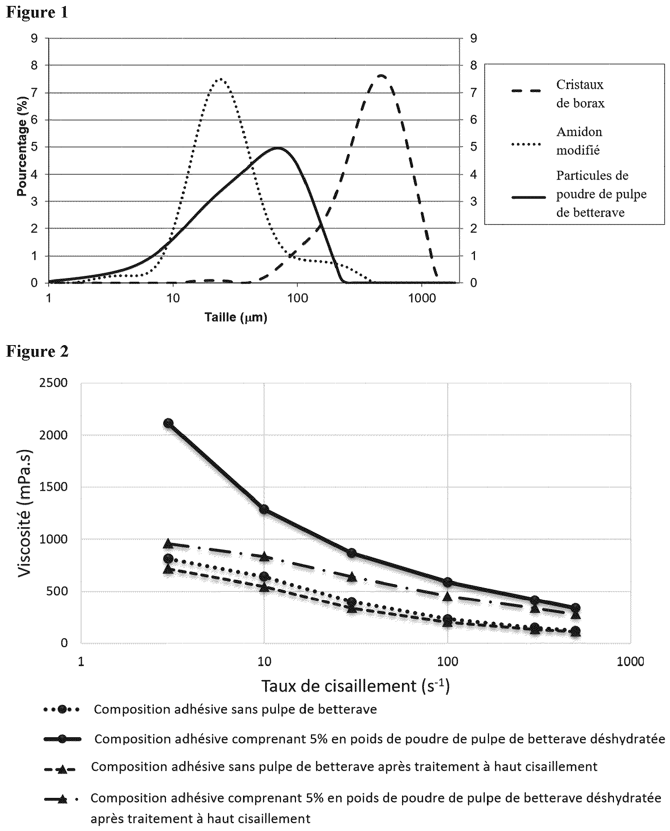

La **Figure 1** est un graphique illustrant la distribution de taille de trois composés de la composition selon l'invention : des cristaux de borax, de l'amidon modifié et des particules de poudre de pulpe de betterave.
La **Figure 2** est un graphique illustrant la variation de la viscosité dynamique de compositions adhésives en fonction du taux de cisaillement appliqué sur celles-ci : une composition adhésive sans pulpe de betterave, une composition adhésive comprenant 5% en poids de poudre de pulpe de betterave déshydratée, une composition adhésive sans pulpe de betterave après traitement à haut cisaillement, et une composition adhésive comprenant 5% en poids de poudre de pulpe de betterave déshydratée après traitement à haut cisaillement.

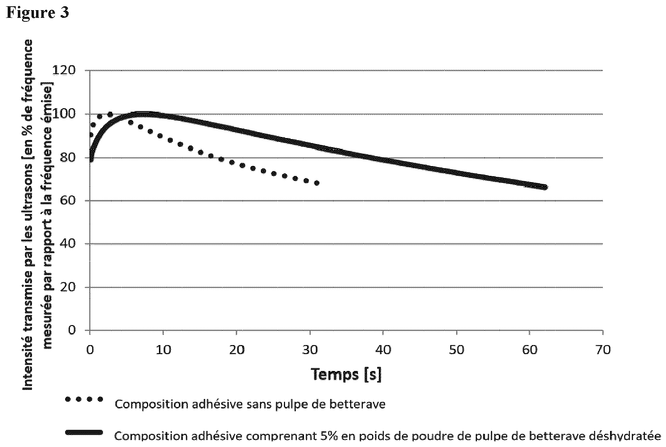

La **Figure 3** est un graphique illustrant la variation de la rétention d'eau provenant de compositions adhésives par du papier en fonction du temps, pour deux compositions adhésives : une composition adhésive sans pulpe de betterave, et une composition adhésive comprenant 5% en poids de poudre de pulpe de betterave déshydratée.

### EXEMPLES

La présente invention se comprendra mieux à la lecture des exemples suivants qui illustrent non-limitativement l'invention.

### Exemple 1 : Préparation de poudre de pulpe de betterave

### Matériel et méthode

### Matériel

Deux types de matière première de pulpe de betterave sont utilisées :
- de la pulpe de betterave sous forme de granulés d'une longueur de 8 mm ± 1 mm ; et
- de la pulpe de betterave sous forme de cossettes.

Leurs caractéristiques sont les suivantes :

**Tableau 1 :**

| | Granulés de pulpe de betterave | Cossettes de pulpe de betterave |
|---|---|---|
| Matière sèche | 89% en poids par rapport au poids total des granulés | 22% en poids par rapport au poids total des cossettes |
| Humidité relative | 11% en poids par rapport au poids total des granulés | 78% en poids par rapport au poids total des cossettes |
| Dimensions | Longueur des granulés : 8 mm | |
| Activité de l'eau AW | 0,592 | 0,640 |
| Capacité de rétention d'eau | 32,2% | |

### Méthode

Les granulés de pulpe de betterave sont broyés puis tamisés afin d'obtenir une poudre micronisée.

Les cossettes de pulpe de betterave sont séchées à 70°C pendant 24 heures puis broyées puis tamisées afin d'obtenir une poudre micronisée.

### Résultats

Les poudres obtenues à partir respectivement de granulés de pulpe de betterave et de cossettes de pulpe de betterave présentent les caractéristiques suivantes :

**Tableau 2 :**

| | Poudre obtenue à partir de granulés de pulpe de betterave | Poudre obtenue à partir de cossettes de pulpe de betterave |
|---|---|---|
| Matière sèche | 89% en poids par rapport au poids total des granulés | 92% en poids par rapport au poids total des cossettes |
| Humidité relative | 11% en poids par rapport au poids total des granulés | 8% en poids par rapport au poids total des cossettes |
| Dimensions des particules de poudre | Diamètre < 120 µm | Diamètre < 120 µm |
| Activité de l'eau AW | 0,525 | 0,396 |
| Capacité de rétention d'eau | 27,3% | |

Au cours de la réduction en poudre de granulés de pulpe de betterave et de cossettes de pulpe de betterave, la Demanderesse s'est en outre aperçue qu'il est plus facile de broyer les granulés que les cossettes de pulpe de betterave, et donc plus facile d'obtenir de la poudre de pulpe de betterave à partir de granulés qu'à partir de cossettes de pulpe de betterave.

### Exemple 2 : Détermination de la distribution de taille des particules de trois composés utilisés dans la composition selon l'invention

### Matériel et méthode

### Matériel

Des cristaux de borax, de l'amidon modifié et des particules de poudre de pulpe de betterave sont étudiés. L'amidon modifié utilisé est le produit Mylbond® 210 fabriqué par l'entreprise TEREOS®. La poudre de betterave utilisée est une poudre obtenue à partir de granulés de pulpe de betterave.

### Méthode

La distribution de taille des particules des trois composés est étudiée.

### Résultats

Les résultats sont présentés dans la figure 1. Il apparait que les particules de pulpe de betterave peuvent être utilisées dans la composition selon l'invention.

### Exemple 3 : Composition adhésive selon l'invention

### Matériel et méthode

### Matériel

Une composition selon l'invention est fabriquée selon le procédé Stein-Hall. Deux parties sont donc préparées, les composés utilisés dans chacune des deux parties étant les suivants :
Première partie :
   - première eau : 1127,86 g
   - premier amidon modifié Mylbond® 210 : 100,01 g
   - solution aqueuse d'hydroxyde de sodium NaOH à 50% : 22 g
   - poudre de pulpe de betterave déshydratée : 5,00 g
Deuxième partie :
   - deuxième eau : 1401,86 g
   - deuxième amidon modifié Mylbond® 210 : 668,08 g
   - poudre de pulpe de betterave déshydratée : 33,40 g
   - poudre de borax déshydraté : 10,8 g

### Méthode

L'appareil de mélange utilisé est le Dispermat® CV-3 possédant un disque de diamètre 50 mm ; l'axe du Dispermat® CV-3 n'est pas centré dans l'appareil, afin de créer un tourbillon.

Les composés de la première partie sont mélangés à une température de 40°C, durant 360 secondes.

Les composés de la deuxième partie sont ajoutés à la première partie et le tout est mélangé durant 360 secondes, permettant l'obtention d'une composition adhésive.

### Résultats

La composition adhésive résultant du mélange de la première et de la deuxième partie a un volume de 2991 millilitres et un poids de 3358 g. Sa matière sèche représente 24,02% en poids par rapport au poids total de ladite composition adhésive. Elle est composée de :
- eau : 2530 g
- amidon modifié Mylbond® 210 : 768 g
- poudre de pulpe de betterave : 38,0 g
- borax : 3,61 g/L
- hydroxyde de sodium : 3,68 g/L

### Exemple 4 : Adhésivité de la composition adhésive selon l'invention

### Matériel et méthode

### Matériel

La composition adhésive selon l'invention telle que fabriquée dans l'exemple 3 et la même composition mais sans pulpe de betterave sont étudiées à l'aide du rhéomètre MCR 302 commercialisé par Anton Paar.

### Méthode

150 µL de la composition adhésive selon l'exemple 3 est déposée entre les sommets des cannelures d'une surface cannelée et une surface plane, l'espace entre les sommets des cannelures et la surface plane étant déterminée. Puis, cet espace est réduit et maintenu à 120 µm pendant 80 secondes au cours desquelles le tout est chauffé à 70°C. Ensuite, la colle est décollée en séparant la surface cannelée et la surface plane à une vitesse de 10 mm/seconde ; la force nécessaire à la séparation des deux surfaces (appelée adhérence) est mesurée.

### Résultats

Les résultats d'adhérence entre les deux surfaces en fonction de la composition adhésive utilisée sont les suivants :

**Tableau 3 :**

| | Composition adhésive sans pulpe de betterave | Composition adhésive comprenant 5% en poids de poudre de pulpe de betterave déshydratée |
|---|---|---|
| Mesures d'adhérence sur 3 essais | 44,56 N | 65,85 N |
| | 44,31 N | 65,85 N |
| | 46,36 N | 61,53 N |
| Adhérence moyenne | 45,07 ± 1,1 N | 64,41 ± 2,4 N |

Il apparait que l'adhérence est plus élevée lorsque la composition adhésive utilisée comprend 5% en poids de pulpe de betterave, l'amélioration de l'adhérence étant de 42,90% par rapport à lorsque la composition adhésive ne comprend pas de pulpe de betterave.

Cela démontre que l'adhésivité d'une composition adhésive selon l'invention, comprenant de la pulpe de betterave, est supérieure à l'adhésivité d'une composition adhésive ne comprenant pas de pulpe de betterave. La pulpe de betterave agit donc comme un agent adhésif.

### Exemple 5 : Texture de la composition adhésive selon l'invention

### Matériel et méthode

### Matériel

La composition adhésive selon l'invention telle que fabriquée dans l'exemple 3 et la même composition mais sans pulpe de betterave sont étudiées à l'aide du rhéomètre MCR 302 commercialisé par Anton Paar.

### Méthode

Les deux compositions adhésives étudiées sont diluées dans de l'eau déminéralisée selon un ratio composition:eau de 60:40 en poids (60 g de colle pour 40 g d'eau déminéralisée). Puis, pour chacune des deux compositions adhésives, 19 g de la composition diluée est placé dans un récipient et soumis à un traitement thermique : augmentation de la température de 3°C par minute jusqu'à atteindre 75°C, puis maintien de la température à 75°C pendant 5 minutes, puis refroidissement jusqu'à atteindre 30°C. Puis, une tige spéciale ST-22 4V en croix est abaissée vers le fond du récipient à une vitesse de 10 mm par seconde ; la force nécessaire pour couper la colle gélatinisée est alors mesurée.

### Résultats

Les résultats sont que la texture des deux compositions adhésives diffère : moins de force est requise pour couper la colle gélatinisée comprenant 5% en poids de poudre de pulpe de betterave déshydratée (12,84 N) que pour couper la colle gélatinisée ne comprenant pas de la pulpe de betterave (18,52 N).

De plus, la colle gélatinisée ne comprenant pas de la pulpe de betterave apparait comme étant un gel cassant, tandis que la colle gélatinisée comprenant 5% en poids de poudre de pulpe de betterave déshydratée apparait comme étant un gel malléable.

### Exemple 6 : Viscosités statiques et dynamiques

### Matériel et méthode

### Matériel

La composition adhésive selon l'invention telle que fabriquée dans l'exemple 3 et la même composition mais sans pulpe de betterave sont étudiées à l'aide de viscosimètres. Des viscosimètres à flux sont utilisés pour mesurer les viscosités dynamiques Lory et Baeur des deux types de compositions ; ces viscosimètres mesurent le temps (en secondes) que met la composition adhésive à couler hors d'un récipient ; ce temps peut être converti en viscosité cinématique (exprimée en unité Stokes). De plus, un viscosimètre permettant de mesurer la viscosité statique Brookfield est utilisé pour chacun des deux types de compositions.

L'appareil Elcometer® 2215 Lory Viscosity Cup est utilisé pour la mesure de la viscosité Lory ; il comprend un récipient qui présente un trou à sa base ainsi qu'une aiguille qui part de cette base du récipient de façon perpendiculaire et ayant une hauteur inférieure à la hauteur du récipient.

L'appareil utilisé pour la mesure de la viscosité Baeur comprend un récipient qui présente un trou à sa base ainsi que deux aiguilles parallèles à la base du récipient, les deux aiguilles étant à des hauteurs différentes par rapport à la hauteur du récipient.

L'appareil utilisé pour la mesure de la viscosité Brookfield comprend un récipient qui comprend une aiguille rotative.

### Méthode

Mesure de la viscosité Lory : le récipient du viscosimètre Elcometer® 2215 Lory Viscosity Cup est rempli avec une composition adhésive ; puis, la composition adhésive est déchargée du récipient à travers le trou du récipient. La durée du flux de déchargement est mesurée à partir du moment où le sommet de l'aiguille fixée à la base du récipient apparait.

Mesure de la viscosité Baeur : le récipient du viscosimètre de mesure de la viscosité Baeur est rempli avec une composition adhésive ; puis, la composition adhésive est déchargée du récipient à travers le trou du récipient. La durée du flux de déchargement est mesurée à partir du moment où la barre située le plus loin par rapport à la base du récipient apparait, et s'arrête lorsque la barre située le plus proche par rapport à la base du récipient apparait.

Mesure de la viscosité Brookfield : le récipient du viscosimètre de mesure de la viscosité Brookfield est rempli avec une composition adhésive ; puis, l'aiguille rotative est mise en rotation à une vitesse fixe de 20 tours par minute, le taux de cisaillement étant de 266 s⁻¹.

### Résultats

Les résultats sont présentés dans le tableau suivant :

**Tableau 4 :**

| | Composition adhésive sans pulpe de betterave | Composition adhésive comprenant 5% en poids de poudre de pulpe de betterave déshydratée |
|---|---|---|
| Viscosité Lory | 19 secondes | 22 secondes |
| Viscosité Baeur | 38 secondes | 43 secondes |
| Viscosité Brookfield | 500 mPa.s | 700 mPa.s |

Il apparait ainsi que les viscosités dynamiques Lory et Baeur ne sont pas significativement impactées par l'addition de 5% en poids de poudre de pulpe de betterave déshydratée. Il apparait par ailleurs que la viscosité statique Brookfield augmente avec l'addition à une composition adhésive de 5% en poids de poudre de pulpe de betterave déshydratée.

### Exemple 7 : Rhéologie

### Matériel et méthode

L'évolution de la viscosité est étudiée en fonction des forces de cisaillement appliquées sur :
- la composition adhésive selon l'invention telle que fabriquée dans l'exemple 3, telle quelle ou après application de forces de cisaillements durant 1 heure à 1750 tours par minute ; et
- la même composition mais sans pulpe de betterave, telle quelle ou après application de forces de cisaillements durant 1 heure à 1750 tours par minute.

### Résultats

Les résultats des deux compositions telles quelles sont présentés en figure 2. Il apparait que la composition adhésive comprenant 5% en poids de poudre de pulpe de betterave déshydratée présente un comportement plus prononcé de rhéofluidification que la composition adhésive sans pulpe de betterave. Etant donné que la composition adhésive comprenant 5% en poids de poudre de pulpe de betterave déshydratée présente une viscosité plus importante que la composition adhésive sans pulpe de betterave, ce d'autant plus à un cisaillement faible, il est recommandé de préparer la composition adhésive comprenant 5% en poids de poudre de pulpe de betterave déshydratée en appliquant un cisaillement d'au moins 300 s⁻¹.

Les résultats des deux compositions après application de forces de cisaillements durant 1 heure à 1750 tours par minute (=traitement à haut cisaillement) sont également présentés en figure 2. Il apparait qu'après application de forces de cisaillements durant 1 heure à 1750 tours par minute, la composition adhésive comprenant 5% en poids de poudre de pulpe de betterave déshydratée présente un comportement plus prononcé de rhéofluidification que la composition adhésive sans pulpe de betterave, surtout à des taux de cisaillement faibles.

Le tableau ci-dessous présente la variation de la viscosité à deux taux de cisaillement donnés (10 s⁻¹ et 300 s⁻¹) pour la composition adhésive comprenant 5% en poids de poudre de pulpe de betterave déshydratée entre sans et avec traitement à haut cisaillement, et pour la composition adhésive sans pulpe de betterave entre sans et avec traitement à haut cisaillement :

**Tableau 5 :**

| Variation en pourcentage entre la viscosité sans et avec traitement préalable à haut cisaillement | Taux de cisaillement : 10 s⁻¹ | Taux de cisaillement : 300 s⁻¹ |
|---|---|---|
| Composition adhésive sans pulpe de betterave | -15,11% | -12,73% |
| Composition adhésive comprenant 5% en poids de poudre de pulpe de betterave déshydratée | -67,77% | -19,35% |

Afin de réduire le pourcentage de variation de viscosité, il est recommandé de préparer la composition adhésive comprenant 5% en poids de poudre de pulpe de betterave déshydratée avec un taux de cisaillement minimum de 300 par seconde.

### Exemple 8 : Test de mesure dynamique de pénétration

### Matériel et méthode

### Matériel

L'appareil PDA.C 02 HVL fabriqué par l'entreprise EMTEC est utilisé afin de réaliser un test de mesure de la pénétration dynamique pour mesurer l'absorption d'une composition adhésive dans du papier sur un temps très court. La composition adhésive selon l'invention telle que fabriquée dans l'exemple 3 et la même composition mais sans pulpe de betterave sont étudiées.

### Méthode

Du papier de référence est fixé à l'aide d'un ruban adhésif double face sur le porte-échantillon de l'appareil PDA.C 02 HVL. Puis, une des deux compositions adhésives étudiées est déposée sous le porte-échantillon. Au temps t=0 du test, le porte-échantillon est mis en contact avec la composition adhésive, puis une cellule réceptrice d'ultra-sons de l'appareil mesure la quantité d'ultra-sons qui peut traverser à la fois la composition adhésive et le papier de référence, les ultra-sons étant émis par une cellule émettrice d'ultra-sons.

On mesure l'absorption d'une composition adhésive sur un papier de référence traduisant l'ancrage mécanique, afin d'étudier si l'introduction d'une poudre de pulpe de betterave déshydratée dans une composition adhésive permet d'améliorer les propriétés d'ancrage de ladite composition dans le papier.

### Résultats

Les résultats sont présentés en figure 3. Il apparait que le délai d'absorption de l'eau par le papier est plus important et la pente de la courbe est moins prononcée lorsque la composition testée est la composition adhésive comprenant 5% en poids de poudre de pulpe de betterave déshydratée que lorsque la composition testée est la composition adhésive sans pulpe de betterave. Ainsi, la rétention d'eau par le papier est moins importante lorsqu'une composition adhésive comprend de la poudre de pulpe de betterave déshydratée.

La pulpe de betterave influence donc l'ancrage mécanique d'une composition adhésive la comprenant et permet une meilleure rétention d'eau, ce qui limite les risques de formation d'ondulation à la surface du papier due à l'imprégnation d'eau du papier, et ce qui permet une meilleure gélatinisation de l'amidon de la composition adhésive.

### Exemple 9 : Elasticité aux états liquide et gélifié

### Matériel et méthode

### Matériel

La composition adhésive selon l'invention telle que fabriquée dans l'exemple 3 et la même composition mais sans pulpe de betterave sont étudiées.

### Méthode

Le module élastique G' et le module visqueux G" des deux compositions adhésives étudiées sont déterminés à deux températures : à 30°C, température à laquelle les compositions adhésives sont liquides ; et à 90°C, température à laquelle les compositions adhésives sont gélifiées.

### Résultats

Les résultats obtenus sont présentés dans le tableau suivant :

**Tableau 6 :**

| | Composition adhésive sans pulpe de betterave | Composition adhésive comprenant 5% en poids de poudre de pulpe de betterave déshydratée |
|---|---|---|
| A 30°C | G'= 3,5154 Pa | G'= 7,2552 Pa |
| | G"= 4,1207 Pa | G"= 10,0770 Pa |
| A 90°C | G'= 65324 Pa | G'= 57524 Pa |
| | G"= 9591 Pa | G"= 9154 Pa |

Il apparait qu'à 30°C, l'élasticité de la composition adhésive est significativement plus élevée pour la composition adhésive comprenant 5% en poids de poudre de pulpe de betterave déshydratée que pour la composition adhésive sans pulpe de betterave. Cela peut permettre à l'échelle industrielle d'avoir un impact positif sur l'effet d'éclaboussure de la composition en diminuant cet effet.

A 90°C, l'élasticité de la composition adhésive comprenant 5% en poids de poudre de pulpe de betterave déshydratée et l'élasticité de la composition adhésive sans pulpe de betterave sont relativement identiques. Une fois séchée, la composition adhésive comprenant 5% en poids de poudre de pulpe de betterave déshydratée forme un film de colle gélifié et séché plus résistant que le film formé par la composition adhésive sans pulpe de betterave séchée.

### Exemple 10 : Préparation d'une composition adhésive selon l'invention à une échelle industrielle, détermination de sa température de gélification et de sa viscosité Baeur et utilisation

### Matériel et méthode

### 1) Préparation d'une composition adhésive selon l'invention à une échelle industrielle

Une composition selon l'invention est fabriquée selon le procédé Stein-Hall. Deux parties sont donc préparées, les composés utilisés dans chacune des deux parties étant les suivants :
Première partie = préparation du primaire selon les étapes suivantes :
   - apport d'eau de ville : 390 kg
   - chauffage de l'eau de ville jusqu'à obtenir une température de 35°C
   - ajout d'amidon modifié Mylbond® 210 : 32 kg
   - maintien de la température du mélange à 35°C
   - ajout de pulpe de betterave micronisée (diamètre des particules de poudre < 120 µm) : 1,6 kg
   - mélange durant 20 secondes
   - ajout d'une solution aqueuse d'hydroxyde de sodium NaOH à 33% : 6,8 kg
   - ajout d'eau de ville : 50 kg
   - mélange durant 500 secondes
Deuxième partie = préparation du secondaire selon les étapes suivantes :
   - apport d'eau de ville : 320 kg
   - ajout d'une solution aqueuse d'hydroxyde de sodium NaOH à 50% : 2,3 kg
   - mélange durant 20 secondes
   - ajout de borax décahydraté : 3,7 kg
   - mélange durant 20 secondes
   - ajout d'amidon modifié Mylbond® 210 : 235 kg
   - ajout de pulpe de betterave micronisée (diamètre < 120 µm) : 11,75 kg
   - mélange durant 40 secondes
   - ajout d'eau de rinçage : 25 kg
   - mélange durant 10 secondes

Puis, les première et deuxième parties sont mélangées :
- ajout de la première partie (=primaire) dans la deuxième partie (=secondaire)
- mélange du primaire et du secondaire durant 300 secondes.

Puis, ajout de 40 kg d'eau de ville puis agitation durant 400 secondes, permettant d'obtenir une composition adhésive selon l'invention.

### 2) Détermination de la viscosité Baeur et de la température de gélification de la composition adhésive obtenue à l'étape 1)

La température de gélification de la composition adhésive (=SGP= starting gel point) est mesurée selon la méthode industrielle suivante :
- prélever 150 ml de la composition adhésive obtenue à l'étape 1) et la mettre dans un bécher de 600 ml ;
- mettre le bécher sur une plaque magnétique chauffante ;
- régler la température de la plaque à 150°C ;
- mettre l'agitateur magnétique dans le bécher ;
- activer l'agitation à une vitesse d'agitation de 750 rpm ;
- mettre la sonde de température proche de l'agitateur magnétique ;
- suivre la température: dès que l'agitateur sautille, relever la température : la température relevée correspond à la température de gélification.

### 3) Utilisation de la composition adhésive obtenue à l'étape 1) : production de cartons ondulés

La production de cartons ondulés de type E flute et B flute est réalisée à une vitesse de 280 m/min sur une machine à onduler de type BHS (2800 mm de large), en utilisant, en tant que composition adhésive, la composition adhésive obtenue à l'étape 1).

### Résultats

La température de gélification de la composition adhésive selon l'invention à une échelle industrielle est de 50°C.

La viscosité Baeur de la composition adhésive selon l'invention à une échelle industrielle est de 60 secondes.

La composition adhésive selon l'invention à une échelle industrielle permet par exemple la production de cartons ondulés de type E flute (=carton ondulé d'épaisseur 1,6 mm) et B flute (=carton ondulé d'épaisseur 2,8 mm) à une vitesse de 280 m/min sur une onduleuse de type BHS de 2800 mm de large.

## Revendications

1. Composition adhésive comprenant :
- de la cellulose ;
- de l'hémicellulose ;
- de l'amidon;
- de l'hydroxyde de sodium ;
- de l'acide borique ou un de ses dérivés, tels que du borate ou du borax ; et
- de l'eau,
dans laquelle ladite composition comprend en outre au moins un composé choisi parmi : des pectines, de la lignine, des acides gras et des protéines.

2. Composition selon la revendication **1**, dans laquelle ladite composition comprend:
- de 0,001% à 5%, préférentiellement de 0,01% à 1%, plus préférentiellement de 0,2% à 0,4%, en poids de cellulose ;
- de 0,001% à 5%, préférentiellement de 0,01% à 1%, plus préférentiellement de 0,2% à 0,4%, en poids d'hémicellulose ;
- de 0,001% à 5%, préférentiellement de 0,01% à 1%, plus préférentiellement de 0,15% à 0,35%, en poids de pectines;
- de 0,001% à 5%, préférentiellement de 0,01% à 1%, plus préférentiellement de 0,01% à 0,1%, en poids de lignine;
- de 0,001% à 5%, préférentiellement de 0,01% à 1%, plus préférentiellement de 0,05% à 0,15%, en poids de protéines ;
- de 0,001% à 5%, préférentiellement de 0,001% à 1%, plus préférentiellement de 0,001% à 0,01%, en poids d'acides gras ;
- de 5% à 50%, préférentiellement de 15% à 30%, plus préférentiellement de 20% à 25%, en poids d'amidon ;
- de 0,001% à 5%, préférentiellement de 0,01% à 1%, plus préférentiellement de 0,2% à 0,4%, en poids d'hydroxyde de sodium ;
- de 0,001% à 5%, préférentiellement de 0,01% à 1%, plus préférentiellement de 0,2% à 0,4%, en poids d'acide borique ou un de ses dérivés, tels que du borate ou du borax ; et
- de 10% à 94,992%, préférentiellement de 62% à 84,929%, plus préférentiellement de 72,79% à 78,989%, en poids d'eau ;
- les pourcentages en poids étant exprimés par rapport au poids total de la composition.

3. Composition selon la revendication **1** ou **2**, dans laquelle l'amidon est de l'amidon modifié, de préférence de l'amidon de blé modifié.

4. Procédé de préparation d'une composition adhésive, comprenant les étapes suivantes :
a) préparer un premier mélange comprenant de la poudre de pulpe de betterave, de l'amidon, de l'eau et de l'hydroxyde de sodium; puis
b) préparer un second mélange en ajoutant au premier mélange obtenu à l'étape a) : de la poudre de pulpe de betterave, de l'amidon, de l'eau et de l'acide borique ou un de ses dérivés.

5. Procédé selon la revendication **4**, comprenant les étapes suivantes :
a) préparer un premier mélange comprenant :
- de 85 à 95 parts d'eau pour 100 parts du premier mélange,
- de 6 à 9 parts d'amidon pour 100 parts du premier mélange,
- de 0,1 à 3 parts de poudre de pulpe de betterave pour 100 parts du premier mélange, et
- de 0,5 à 5 parts d'hydroxyde de sodium pour 100 parts du premier mélange; puis
b) préparer un second mélange à ajouter au premier mélange obtenu à l'étape a) et comprenant :
- de 0,5 à 5 parts de poudre de pulpe de betterave pour 100 parts du second mélange,
- de 25 à 45 parts d'amidon pour 100 parts du second mélange,
- de 50 à 70 parts d'eau pour 100 parts du second mélange, et
- de 0,1 à 3 parts d'acide borique ou un de ses dérivés pour 100 parts du second mélange.

6. Procédé selon la revendication **5**, dans lequel le second mélange comprend en outre de 0,05 à 2 parts d'hydroxyde de sodium pour 100 parts du second mélange, en particulier une solution aqueuse d'hydroxyde de sodium NaOH à 50%.

7. Procédé selon l'une quelconque des revendications **4** à **6**, dans lequel l'étape a) est réalisée à une température de 35°C et/ou l'étape b) est réalisée à une température de 20°C.

8. Procédé selon l'une quelconque des revendications **4** à **7**, dans lequel la poudre de betterave utilisée à l'étape a) et/ou à l'étape b) est composée de grains de pulpe de betterave broyée dont le diamètre maximal est de 120 µm.

9. Procédé selon l'une quelconque des revendications **4** à **8**, dans lequel l'hydroxyde de sodium utilisé à l'étape a) et/ou à l'étape b) est une solution aqueuse d'hydroxyde de sodium NaOH à 33%, de préférence l'hydroxyde de sodium utilisé à l'étape a) dans le premier mélange est une solution aqueuse d'hydroxyde de sodium NaOH à 33%.

10. Procédé selon l'une quelconque des revendications **4** à **9**, dans lequel l'acide borique ou un de ses dérivés utilisé à l'étape b) dans le second mélange est du borax décahydraté.

11. Procédé selon l'une quelconque des revendications **4** à **10**, dans lequel l'amidon utilisé à l'étape a) et/ou à l'étape b) est de l'amidon de blé modifié.

12. Procédé de préparation d'une composition adhésive selon la revendication **1**, comprenant les étapes suivantes :
a) préparer un premier mélange par ajout successif de :
- de 100 kg à 1000 kg, préférentiellement de 300 kg à 500 kg, plus préférentiellement de 350 kg à 450 kg, encore plus préférentiellement environ 390 kg d'eau, en particulier de l'eau de ville, puis
- de 10 kg à 50 kg, préférentiellement de 20 kg à 40 kg, plus préférentiellement de 30 kg à 35 kg, encore plus préférentiellement environ 32 kg d'amidon, en particulier de l'amidon de blé modifié, puis
- de 0,1 kg à 5 kg, préférentiellement de 0,5 kg à 3 kg, plus préférentiellement de 1 kg à 2 kg, encore plus préférentiellement environ 1,6 kg de pulpe de betterave micronisée, en particulier de la pulpe de betterave micronisée dont le diamètre des grains de pulpe de betterave broyée est inférieur à 120 µm, puis
- de 2 kg à 10 kg, préférentiellement de 4 kg à 8 kg, plus préférentiellement de 6 kg à 7 kg, encore plus préférentiellement environ 6,8 kg d'une solution aqueuse d'hydroxyde de sodium, en particulier une solution aqueuse d'hydroxyde de sodium NaOH à 33%, puis
- de 10 kg à 100 kg, préférentiellement de 30 kg à 70 kg, plus préférentiellement de 40 kg à 60 kg, encore plus préférentiellement environ 50 kg d'eau, en particulier de l'eau de ville, puis
b) préparer un second mélange par ajout successif de :
- de 100 kg à 600 kg, préférentiellement de 200 kg à 500 kg, plus préférentiellement de 300 kg à 350 kg, encore plus préférentiellement environ 320 kg d'eau, en particulier de l'eau de ville, puis
- de 1 kg à 10 kg, préférentiellement de 1 kg à 5 kg, plus préférentiellement de 2 kg à 3 kg, encore plus préférentiellement environ 2,3 kg d'une solution aqueuse d'hydroxyde de sodium, en particulier une solution aqueuse d'hydroxyde de sodium NaOH à 50%, puis
- de 1 kg à 10 kg, préférentiellement de 2 kg à 5 kg, plus préférentiellement de 3 kg à 4 kg, encore plus préférentiellement environ 3,7 kg de borax, en particulier du borax décahydraté, puis
- de 50 kg à 500 kg, préférentiellement de 100 kg à 300 kg, plus préférentiellement de 200 kg à 250 kg, encore plus préférentiellement environ 235 kg d'amidon, en particulier de l'amidon de blé modifié, puis
- de 1 kg à 30 kg, préférentiellement de 5 kg à 20 kg, plus préférentiellement de 10 kg à 14 kg, encore plus préférentiellement environ 11,75 kg de pulpe de betterave micronisée, en particulier de la pulpe de betterave micronisée dont le diamètre des grains de pulpe de betterave broyée est inférieur à 120 µm, puis
- de 1 kg à 100 kg, préférentiellement de 5 kg à 50 kg, plus préférentiellement de 20 kg à 30 kg, encore plus préférentiellement environ 25 kg d'eau, en particulier de l'eau de ville, puis
c) mélange du premier mélange avec le second mélange, puis
d) ajout à la composition obtenue à l'étape c) de 1 kg à 100 kg, préférentiellement de 20 kg à 60 kg, plus préférentiellement de 30 kg à 50 kg, encore plus préférentiellement environ 40 kg d'eau, en particulier de l'eau de ville, puis mélange.

13. Composition adhésive obtenue par le procédé selon l'une quelconque des revendications **4** à **12**.

14. Utilisation d'une composition adhésive selon l'une quelconque des revendications **1** à **3** ou **13** dans la fabrication de carton.

15. Carton ondulé comprenant au moins une feuille de papier plane et au moins une feuille de papier ondulée collées au niveau des sommets des ondulations de la feuille de papier ondulée avec une composition adhésive selon l'une quelconque des revendications **1** à **3** ou **13**.
